# EUROPÄISCHE PATENTSCHRIFT

(11) **EP 1 287 086 B1**
(45) Veröffentlichungstag und Bekanntmachung des Hinweises auf die Patenterteilung: **18.08.2004**
(21) Anmeldenummer: 01945183.0
(22) Anmeldetag: 22.05.2001
(51) Int. Cl.: C09D 183/08, C08J 7/04, C09D 183/14, G02B 5/23, G02B 1/10

(54) **HYBRIDPOLYMERMATERIAL FÜR PHOTOCHROME BESCHICHTUNGEN UND DAMIT BESCHICHTETE OPTISCHE GEGENSTÄNDE UND VERGLASUNGEN**
HYBRID POLYMER MATERIAL FOR PHOTOCHROMIC COATINGS AND OPTICAL ARTICLES AND GLAZINGS COATED THEREWITH
MATERIAU POLYMERE HYBRIDE POUR REVETEMENTS PHOTOSENSIBLES ET ARTICLES OPTIQUES ET VITRAGES RECOUVERTS D'UN TEL MATERIAU

(30) Priorität: 25.05.2000 DE 10025906
(43) Veröffentlichungstag der Anmeldung: 05.03.2003
(73) Patentinhaber: Fraunhofer-Gesellschaft zur Förderung der angewandten Forschung e.V., 80686 München (DE)
(72) Erfinder: SCHOTTNER, Gerhard, 91560 Heilsbronn (DE); KRON, Johanna, 97776 Eussenheim (DE); POSSET, Uwe, Dr., 90556 Cadolzburg (DE); MALATESTA, Vincenzo, I-20090 San Maurizio al Lambro (IT); CRISCI, Luciana, I-20074 Graffignana (IT); WIS, Maria, Lucia, I-20122 Milano (IT)
(86) Internationale Anmeldenummer: PCT/EP2001/005882
(87) Internationale Veröffentlichungsnummer: WO 2001/090268

(56) Entgegenhaltungen:
- EP-A- 1 110 966
- WO-A-95/16522
- WO-A-99/41326
- FR-A- 2 795 085
- PATENT ABSTRACTS OF JAPAN vol. 017, no. 700 (C-1145), 21. Dezember 1993 (1993-12-21) & JP 05 238785 A (SEKISUI CHEM CO LTD), 17. September 1993 (1993-09-17)
- PATENT ABSTRACTS OF JAPAN vol. 017, no. 551 (C-1117), 5. Oktober 1993 (1993-10-05) & JP 05 156016 A (TOKUYAMA SODA CO LTD), 22. Juni 1993 (1993-06-22)
- PATENT ABSTRACTS OF JAPAN vol. 017, no. 516 (C-1112), 17. September 1993 (1993-09-17) & JP 05 140313 A (TOKUYAMA SODA CO LTD), 8. Juni 1993 (1993-06-08)
- PATENT ABSTRACTS OF JAPAN vol. 018, no. 140 (C-1177), 8. März 1994 (1994-03-08) & JP 05 320177 A (TOKUYAMA SODA CO LTD), 3. Dezember 1993 (1993-12-03)
- PATENT ABSTRACTS OF JAPAN vol. 2000, no. 11, 3. Januar 2001 (2001-01-03) & JP 2000 226571 A (KYOCERA CORP), 15. August 2000 (2000-08-15)

## Beschreibung

Die vorliegende Erfindung betrifft Materialien und Verfahren zum Herstellen photochromer, hybridpolymerer Beschichtungen auf der Basis von Silanen für unterschiedliche Substrate wie Kunststoffe, Gläser und Metalle sowie damit beschichtete Produkte. Die erfindungsgemäßen Beschichtungen eignen sich für die Herstellung optischer Bauteile, z.B. von optischen Linsen und Brillengläsern für opththalmische und nicht-ophthalmische Anwendungen oder von Visieren, können aber genauso gut auch für Verglasungen oder Beschichtungen großer Kunststoffflächen, z.B. im Automobil- und Gebäudebereich, eingesetzt werden.

Unter Photochromie versteht man die lichtinduzierte Veränderung der lichttransmittiven Eigenschaften eines Stoffes. Zur Nutzung dieses Effekts für optische Anwendungen wurde vorgeschlagen, polymere Beschichtungsmaterialien herzustellen, in denen entsprechende Farbstoffe gelöst vorliegen. Allerdings sind hier viele Beschränkungen und Nachteile gegeben. Anorganisches Material wie z.B. Silberhalogenidteilchen weisen eine nur geringe Verträglichkeit mit organischen Harzen auf. Die Photochromie vieler organischer Verbindungen kommt laut DE 36 22 871 A1 nur in organischen Lösungen zum Tragen, ist in einer festen Netzwerkumgebung jedoch wesentlich schwächer. Es wird dort daher eine photochrome Linse vorgeschlagen, die diese Nachteile nicht aufweisen soll. Die Linse ist mit einem dreidimensionalen Harz beschichtet, das aus einer Lösung des Farbstoffs mit den unvemetzten Harzbestandteilen hergestellt werden kann. Über dieser Schicht kann ggf. eine weitere Schicht aufgebracht sein, die der Linse eine verbesserte Oberflächenhärte und Kratzfestigkeit verleiht.

Allerdings besitzen in einer organischen Polymermatrix gelöste photochrome Farbstoffe eine nur geringe UV-Stabilität. Die US 5,728,758 (Smith) beschreibt daher eine wäßrige Beschichtungszusammensetzung, mit der ein mit dem photochromen Farbstoff eingefärbter optischer Gegenstand beschichtet werden kann, wodurch nicht nur die Abriebfestigkeit verbessert wird, sondern auch die Ermüdungserscheinungen des Farbstoffs verringert werden sollen. Die hierfür vorgesehene Beschichtungslösung besteht im wesentlichen aus Tetraalkoxysilanen und Trialkoxysilanen in einem bestimmten Gewichtsverhältnis. Eine ähnliche Zusammensetzung ist in der US 5,624,757 desselben Erfinders beschrieben. Die in der DE 42 20 251 A1 vorgeschlagene Beschichtung soll mindestens eine O₂-diffusionshemmende Sperrschicht aufweisen, um die Lebensdauer der photochromen Farbstoffe zu verbessern, da diese vor allem durch ihre Reaktivität im angeregten Zustand, insbesondere gegenüber Sauerstoff, begrenzt seien. Diese begrenzte Lebensdauer sei einer der Hauptgründe, die einer breiteren Anwendung und Vermarktung photochromer Kunststoffgläser im Wege stehen.

Die US-Patentschrift 4.556.605 (Mogami et al.) beschreibt eine photochrome Beschichtungszusammensetzung, aus der eine für Augenlinsen vorgesehene Beschichtung hergestellt werden kann. Diese umfaßt ein organisches Silan oder dessen Hydrolysat, ggf. eine Epoxyverbindung und einen Epoxyharz-Katalysator, und ein in der Mischung dispergiertes photochromes Material. Allerdings ist die Menge an einarbeitbarem Farbstoff sehr begrenzt. Dies führt dazu, daß die Farbstoffe bei Konzentrationen, wie sie zur Erreichung marktakzeptabler Farbtiefen nötig wären, auf den gehärteten Schichten ausblühen oder bereits aus den Beschichtungslösungen präzipitieren. Der ausgeprägte Weichmachereffekt der organischen Farbstoffe führt darüber hinaus zu einer Beeinträchtigung der tribologischen Eigenschaften.

Nach Crano et al. [Applied Photochromic Polymer Systems (Hrsg. C.B. McArdle), Chapman and Hall, N.Y., 1992, S. 31 -79] besitzen Linsen mit physikalisch farbstoffdotierten photochromen Schichten eine inhärente Beschränkung hinsichtlich ihres potentiellen Leistungsverhaltens. Zur Herstellung solcher Schichten (unter Annahme von 5 µm Schichtdicke) mit ausreichender Photochromie müßten 25-50 Gew.-% Farbstoff in die Matrix eingebracht werden, was wiederum die physikalischen und mechanischen Eigenschaften des Matrixmaterials beeinträchtigte und die Integrität der Matrix verlorenginge (S.68). Außerdem seien Farbstoffe wie Oxazine sehr empfindlich gegenüber starken Oxidantien und würden daher leicht während der Härtung der Matrix zersetzt, wenn sie zusammen mit den Monomeren für das Polymere formuliert würden.

Krongauz et al. offenbaren in der US-Patentschrift 5.473.068 ein Verfahren zur Herstellung eines Polysiloxans mit photochromophoren, Spironaphthooxazine enthaltenden Gruppen. Das Polysiloxan kann linear oder geschlossenkettig sein. Der Vorteil dieser Polysiloxane liege darin, daß sie keine freien Säuregruppen enthalten, die die Kinetik der die Photochromie auslösenden Reaktionen beeinflussen können. Ferner sei es möglich, ein Verhältnis von Silicium zu photochromer Verbindung von 1 zu 1 zu erhalten, wodurch die optische Dichte Maximalwerte erreichen könne. Das Polysiloxan kann mit Polyhexamethylendiisocyanat, ggf. in Gegenwart eines Katalysators, bei erhöhten Temperaturen zu einem Elastomer gehärtet werden. Um geeignete photochrome Beschichtungen zu erhalten, kann das Polysiloxan aus der Lösung direkt auf einen Linsenkörper aufgebracht und dort gehärtet werden. Weiterer photochromer Farbstoff kann in das Elastomer eingebracht werden, indem dieses in einer geeigneten Farbstofflösung gequollen wird.

Die Erfinder der vorliegenden Erfindung sind zu der Erkenntnis gekommen, daß eine Farbstoffbeladung von einem Mol Farbstoff pro struktureller Silan-Einheit nicht notwendigerweise zu hoher photochromer Farbintensität führt, wie dies von Krongauz nahegelegt wird. Sie haben festgestellt, daß in Polysiloxanmatrices bereits ab etwa 20 %iger Beladung deutliche Sättigungs- und/oder Quenchingeffekte auftreten, die dazu führen, daß die photochrome Aktivität bei Konzentrationen von 20-25 Gew.-% ein Maximum erreicht und dann wieder abnimmt. Die photochromen Moleküle liegen dann vermutlich nicht mehr isoliert voneinander in der Matrix vor. So können Wechselwirkungen auftreten, die die o.g. Effekte verursachen. Der Schaltprozeß stellt darüber hinaus eine monomolekulare Reaktion zwischen zwei Spezies mit unterschiedlichem Raumbedarf dar. Die Annahme einer Beeinflussung des Schaltverhaltens bei hohen Konzentrationen ist deshalb plausibel.

Dies wird im wesentlichen auch durch den Artikel von Yitzchaik et al. in V. Lig. Cryst. 1990, Bd. 8, 677-686 bestätigt, auf den von Krongauz et al. a.a.O. Bezug genommen wird. Darin werden Polysiloxane mit verschiedenen photochromen Spironaphthooxazinen beschrieben, wobei die Beladung aber nicht bei 100 % liegt, obwohl die Bezugnahme dies nahelegt. Des weiteren zeigen die gemessenen Absorptionsspektren in Fig. 4 (optische Dichten von etwa 0,2 und 0,7 im nichtaktivierten bzw. aktivierten Zustand) nach OD = -log T lediglich eine Eindunklung von ca. 63 % auf ca. 20 % Transmissionsgrad bei 620 nm. Die geringe Anfangstransmission (63 %) ist Ausdruck der hohen Ausgangsfärbung der Proben, erkennbar an der bereits im Grundzustand vorliegenden Absorption (unterstes Spektrum). Die gezeigte Eindunklung ist nach Ansicht von Marktteilnehmern aus dem Ophthalmikbereich nicht akzeptabel (zu ausgeprägte Anfangsfärbung, zu geringer Transmissionshub).

Die von Krongauz et al. vorgeschlagene zusätzliche Tränkung mit Spirooxazin-Lösung kann diese Nachteile nicht beseitigen, da maximale Farbstoffgehalte nicht maximale Einfärbung bedeuten. Es findet sich bei Krongauz dementsprechend auch keine Angabe, daß in solchen Systemen kräftigere Einfärbungen zu erreichen seien.

Weiterhin sind die von Krongauz beschriebenen Polysiloxane nur anorganisch linearer oder cyclisch oligomerer Natur. Solche Systeme besitzen üblicherweise keine ausreichende Härte und Abriebfestigkeit, um sie für ophthalmische Anwendungen interessant zu machen. Durch eine Vernetzung mit HDI wird die ohnehin geringe Härte der linearen Polysiloxane noch geringer; man erhält Elastomere, die sich aufgrund der ungünstigen mechanischen Eigenschaften nicht als Deckschichten eignen.

Aufgabe der vorliegenden Erfindung ist es, ein Beschichtungsmaterial (als Sol bzw. Lack oder in ausgehärteter Form) für photochrome Beschichtungen bereitzustellen, das vielseitig verwendbar ist und dessen Edukte leicht und mit guten Ausbeuten synthetisiert werden können. Das Material soll marktakzeptable tribologischmechanische Eigenschaften besitzen. Das Vorliegen einer hohen Farbstoffkonzentration und das Erreichen eines starken Transmissionshubs sollen möglich sein. Die ausgehärteten Beschichtungen sollen auf organischen und anorganischen Substraten gut haften und eine hohe optische Qualität sowie eine hohe Härte und Abriebfestigkeit aufweisen.

Diese Aufgabe wird dadurch gelöst, daß Beschichtungsmaterialien und Beschichtungen bereitgestellt werden, die unter Verwendung von monomeren Silanen ("Silan-Photochromophore") mit der Formel (1) hergestellt wurden,

XₐSi(R')_{b}(A-Y-P)_{4-a-b} (1)

die ihrerseits aus der Umsetzung von Silanen der Formel (2)

XₐSi(R')_{b}(A-Y')_{4-a-b} (2)

mit photochromen Farbstoffen der Formel (3)

Q-P (3)

herstellbar sind, worin
X gleich oder verschieden ist und eine hydrolysierbare Gruppe darstellt,
R' gleich oder verschieden ist und eine nicht-hydrolysierbare, über Kohlenstoff an das Silicium gebundene, ggf. organisch polymerisierbare Gruppe ist,
A vorhanden sein kann oder nicht und einen Spacer darstellt,
Y' eine mit der Gruppe Q reaktive Gruppe darstellt,
Q eine mit der Gruppe Y' reaktive Gruppe darstellt,
Y eine Gruppe ist, die durch Umsetzung der Gruppen Y' und Q herstellbar ist,
P ein eine photochrome Gruppe tragender Rest ist,
a 1 bis 3 bedeutet,
b 0 bis 2 bedeutet und
a+b 2 oder 3 bedeuten.

Neben einer photochromen Gruppe P tragen die Silane also weiterhin eine bis drei Gruppen X , die sie befähigen, durch Hydrolyse und Kondensation vemetzt zu werden, und zwar allein oder in Mischung mit weiteren Silanen und/oder anderen hydrolysierbaren/kondensierbaren Metallverbindungen und/oder anderen geeigneten Partnern, mit denen sie anorganisch-organische Hybridpolymere bilden können. Geeignete Gruppen X sind dem Fachmann bekannt. Beispielhaft seien hier Wasserstoff, Halogen, Hydroxy, ggf. substituertes Alkoxy mit bevorzugt 1 bis 4 Kohlenstoffatomen, insbesondere Methoxy oder Ethoxy, ggf. substituiertes Acyloxy mit bevorzugt 2 bis 5 C-Atomen, ggf. substituiertes Alkylcarbonyl mit vorzugsweise 2 bis 5 C-Atomen, ggf. substituiertes Alkoxycarbonyl mit bevorzugt 2 bis 5 C-Atomen, ggf. substituiertes Aryloxy oder Amingruppen mit der Formel NR¹₂ genannt, worin R¹ Wasserstoff oder ggf. substituiertes Alkyl mit bevorzugt 1 bis 4 Kohlenstoffatomen ist. Durch die Zahl und Art dieser Gruppen können die Hydrolyse- und Kondensationsgeschwindigkeit, der Vernetzungsgrad sowie sonstige Eigenschaften in dem Fachmann bekannter Weise eingestellt werden.

Gegebenenfalls können die für die Erfindung verwendbaren Silane weiterhin mindestens eine organische, über Kohlenstoff an das Silan gebundene Gruppe R' tragen, die hydrolyseunempfindlich ist und darüberhinaus fakultativ organisch polymerisierbar sein kann. Diese Gruppe kann auch als organofunktionelle Gruppe bezeichnet werden. Durch die Art und Länge dieser Gruppen können die Eigenschaften der zu erzeugenden Beschichtung mit beeinflußt werden. R' kann beispielsweise Alkyl, Alkenyl,- Alkinyl, Aryl, Arylalkyl, Alkylaryl, Alkenylaryl, Arylalkenyl, Arylalkinyl oder Alkinylyaryl mit vorzugsweise 1 bis 12 Kohlenstoffatomen in der Hauptkette darstellen, wobei diese Reste durch O- oder S- Atome oder die Gruppe NR¹ unterbrochen sein und/oder einen oder mehrere Substituenten aus der Gruppe der Halogene und der gegebenenfalls substituierten Amino-, Amid-, Aldehyd-, Keto-, Alkylcarbonyl, Carboxy, Mercapto-, Cyano-, Hydroxy-, Alkoxy-, Alkoxycarbonyl-, Sulfonsäure-, Phosphorsäure-, Acryloxy, Methacryloxy-, Epoxy-, Succinyl-, Glycidyloxy- oder Vinylgruppen tragen können. Als ggf. organisch polymerisierbare Substituenten eignen sich dabei z.B. (Meth-)Acrylatgruppen, Vinylgruppen oder Glycidylgruppen, die einer zusätzlichen organischen Vernetzung zugänglich sind oder an einer solchen der weiteren Beschichtungs-Bestandteile teilnehmen können.

Es hat sich gezeigt, daß der Einsatz monomerer Silan-Photochromophore wie oben definiert die Herstellung verbesserter Beschichtungssysteme ermöglicht, die ausgeprägte Photochromieeffekte besitzen. Diese Beschichtungssysteme lassen sich bei Raumtemperatur herstellen, so daß die Funktionsfähigkeit der Chromophore in ihrer Gesamtmenge aufrechterhalten bleibt. Durch die chemisch kovalente Verankerung der Farbstoffe in der Polymermatrix wird außerdem deren Weichmacherwirkung sowie Migration praktisch ausgeschlossen.

Die wie oben definierten Silane tragen bevorzugt nur eine Farbstoffgruppe P, können ggf. aber auch zwei solcher Gruppen tragen, wenn die sterischen Gegebenheiten dies zulassen.
Vorzugsweise ist die photochromophore Gruppe P über einen Spacer A an das Silan gebunden. Dies erhöht die Beweglichkeit der Gruppe; sterische Hinderungseffekte werden dadurch reduziert. Der Spacer wird bevorzugt dadurch in das Molekül inkorporiert, daß das Silan einen über Kohlenstoff gebundenen organischen Rest A aufweist, z.B. mit einer Kette von 1 bis 8 oder sogar 10, bevorzugt 2 oder 3 Kohlenstoffatomen, der eine möglichst weit vom Silicium abgelegene reaktive Gruppe Y' enthält. Diese reaktive Gruppe wird mit einem hiermit reagierenden Substituenten Q eines photochromen Moleküls umgesetzt, wobei die Gruppe Y entsteht.

Der Kreis der photochromen Farbstoffe, von denen sich die Gruppe P ableitet, ist nicht beschränkt, sofern sie aus der Gruppe der organischen Farbstoffe ausgewählt werden: So können Chromene, Naphtho- und Benzopyrane, Spiropyrane, Spirooxazine, Fulgide, Dihydroindolizine, Fulgimide und dgl. eingesetzt werden. Beispiele sind Spiroindolino-naphthooxazine oder Spiro-isoindolino-naphthooxazine. Um den Farbstoff an das Silanmolekül zu binden, können beliebige Reaktionen gewählt werden, mit denen sich eine Kopplung von Gruppen bewirken läßt. So können der Farbstoff oder umgekehrt das Silan eine organisch gebundene Hydroxy-, Carboxyl-, Ester-, Epoxid-, Succinimidester-, Cyanat-, Isocyanat, Amino- oder Iminogruppe oder ein Halogenatom oder dgl. tragen, während der Reaktionspartner eine hiermit reaktive Gruppe besitzt. Ein Beispiel ist die Umsetzung eines an einem Arylsubstituenten OH-funktionalisierten Farbstoffs mit einem Silan, das eine OH-reaktive Gruppe trägt, z.B. A-(CH₂)₃-Si(OEt)₃ mit A = -NCO oder Halogen.

Ein gut geeignetes Verfahren zum Herstellen der silylierten photochromen Farbstoffe ist die Umsetzung von photochromen Farbstoffen der Formel (3), worin Q eine vorzugsweise an einem Arylsubstituenten gebundene OH-Gruppe ist, mit Silanen der oben definierten Formel (2), worin Y' -NCO oder Halogen ist, wobei als Gruppe Y -NH-C(O)O- oder ―O- entsteht. Natürlich ist auch das inverse Reaktionsschema möglich. Vorzugsweise werden Silane eingesetzt, in denen bis zu drei Gruppen X eingesetzt werden, und insbesondere aus weiter unten erläuterten Gründen ist es ebenfalls bevorzugt, daß die Gruppen X Alkoxy-, besonders bevorzugt Ethoxygruppen sind. Der Spacer besteht ebenfalls besonders bevorzugt aus einer n-Propylengruppe. Die Umsetzung erfolgt vorzugsweise in einem unpolaren Lösungsmittel wie Toluol, ggf. in Gegenwart eines für die Reaktion geeigneten Katalysators (für die Umsetzung von Isocyanat mit OH-Gruppen z.B. einem Alkylamin) und unter Inertgas.

Beispielhafte Silane sind solche der nachfolgenden Strukturen (4), (5) und (6). (4) stellt ein silyliertes Spiro-indolino-naphthooxazin dar, (5) ein silyliertes Chromen und (6) ein silyliertes Spiroisoindolinonaphthooxazin.

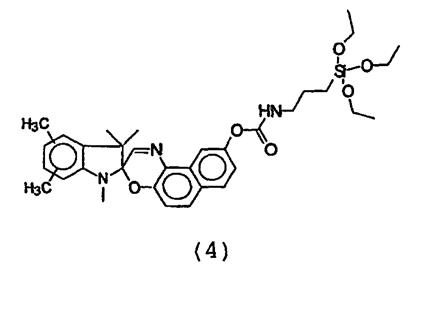

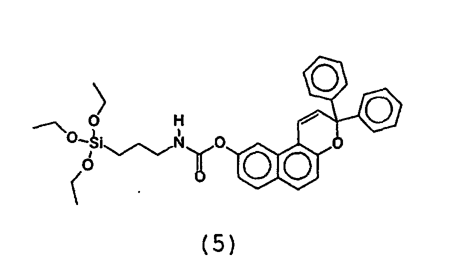

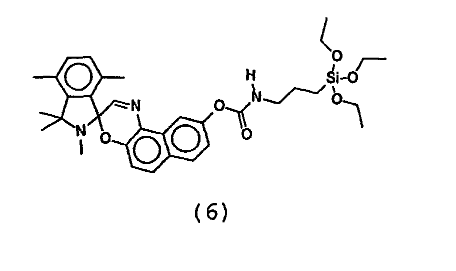

Die erfindungsgemäßen, mindestens eine photochrome Gruppe enthaltenden Silane eignen sich für die Herstellung von Solen bzw. Lacken, die als hybride Systeme für Beschichtungsmaterialien verwendet werden können. Diese erhält man durch Hydrolyse und Kondensation der Ausgangsmaterialien; sie können nach Aufbringen auf einem geeigneten Substrat dann ggf. zusätzlich durch eine organische Polymerisation verfestigt werden.

Unter "hybriden Systemen" sollen hier sowohl solche Systeme verstanden werden, die von ein und demselben Silan-Molekül ausgehende, anorganisch sowie organisch vernetzte Domänen besitzen, also auf molekularer Ebene hybrid sind, wofür sich insbesondere Silane mit hydrolysierbaren sowie nicht-hydrolysierbaren, organischen Resten anbieten, als auch solche Systeme, in denen organische und anorganische Domänen von verschiedenen Molekülarten gebildet werden, z.B. eine Mischung aus Organopolysiloxan und einem organischen Quervernetzer.

Wenn die photochromen Silane neben einer oder mehreren hydrolyseempfindlichen Gruppen bereits selbst eine nicht-hydrolysierbare, über Kohlenstoff an das Silicium gebundene, ggf. organisch polymerisierbare Gruppe tragen, können sie ggf. allein hydrolysiert und kondensiert (z.B. nach der "Sol-Gel"-Methode) und ggf. anschließend organisch polymerisiert werden. Das flüssige oder pastöse Sol (nach Formulierung, d.h. nach Einstellung der gewünschten Eigenschaften wie z.B. der Viskosität auch als Lack bezeichnet) kann dabei mit gängigen Verfahren auf ein Substrat aufgebracht und die so erzeugte Beschichtung durch organische Polymerisation der entsprechenden Gruppen ausgehärtet werden.

Die photochromen Silane eignen sich aber vor allem zur Herstellung von Beschichtungen in Kombination mit weiteren Bestandteilen. So können eines oder mehrere davon beispielsweise mit anderen Silanen und/oder weiteren Metallverbindungen umgesetzt werden, die ebenfalls hydrolysierbare Gruppen aufweisen. Dies kann vorzugsweise ebenfalls mit Hilfe des bereits oben erwähnten Sol-Gel-Verfahrens erfolgen; andere Techniken sind aber ebenfalls möglich.

Besonders geeignet sind hierfür beispielsweise einen Epoxidring enthaltende Silane oder Vorkondensate hiervon, wie sie in der DE 40 20 316 A1 offenbart sind, weil sich hiermit flexible und sehr gut abriebbeständige Beschichtungen erzeugen lassen. Bei diesen Epoxid-Silanen kann es sich um Gemische von Silanverbindungen SiR₄ handeln, die in der Summe insbesondere 4,5 bis 1,5 hydrolysierbare Gruppen pro nicht hydrolysierbarer Epoxygruppe aufweisen. Gegebenenfalls kann jedoch auch nur ein Epoxysilan eingesetzt werden, z.B. ein Glycidyloxyalkyltrialkoxysilan wie 3-Glycidyloxypropyltrimethoxysilan. Hydrolyse und Kondensation können nach Zugabe der notwendigen Wassermenge lösemittelfrei (was insbesondere günstig ist, wenn die Hydrolyse zur Bildung von Alkoholen wie Ethanol führt) oder in einem geeigneten Lösungsmittel erfolgen, das dann ggf. gleichzeitig zur Einstellung der gewünschten Viskosität herangezogen werden kann. Gut geeignet sind beispielsweise Alkohole, Ether wie Tetrahydrofuran oder niedere Dialkylether, niedrig siedende Ester wie Essigsäureethylester sowie Mischungen der genannten Substanzen. Die Hydrolyse kann durch einen geeigneten, basischen oder sauren Katalysator unterstützt werden, z.B. HCl oder ein Alkylimidazol. Das Molverhältnis von zur Hydrolyse eingesetztem Wasser zu hydrolysierbaren Gruppen kann dabei in weiten Bereichen variiert werden und liegt, da auch uberstöchiometrische Mengen eingesetzt werden können, z.B. im Bereich zwischen 2,0:1 bis 0,1:1, vorzugsweise etwa 0,7:1 bis 0,45:1. Zur Einstellung der Lackeigenschaften können auch nach der Hydrolyse übliche Additive und Lösemittel (z.B. hochsiedende Alkohole oder weniger polare Solventien wie cyclische Ether, Glykolether oder Mischungen hiervon) zugegeben bzw. gegen den gebildeten Alkohol ausgetauscht werden. Zur Stabilisierung des photochromen Farbstoffes ist die Zugabe von üblichen UV-Absorbern (z.B. Cumarinen), Radikalfängern (z.B. sterisch gehinderten Aminen, HALS) oder *Excite d State Quenchem* ¹ (z.B. Ni²⁺-Komplexen) möglich.
¹ Spezies, die den angeregten Zustand des photochromen Farbstoffs desaktivieren (=quenchen)

Nach Aufbringen des hydrolysierten, kondensierten Lacks auf ein Substrat kann dieser polymerisiert werden. Dies geschieht vorzugsweise durch vorheriges Zusetzen eines thermischen Initiators und anschließende Wärmebehandlung. Gegebenenfalls känn die Härtung auch durch vorheriges Zusetzen eines Photopolymerisationsinitiators (z.B. Irgacure®) und anschließendes Bestrahlen mit UV-Licht erfolgen. Diese Schritte sind in der genannten DE 40 20 316 A1 ausführlich beschrieben.

Bevorzugt werden die die photochromen Gruppen tragenden Silane in einer Menge von 1 bis 50 Gew.-%, vorzugsweise von 5 bis 50 Gew%, statther bevorzugt von etwa 10 bis 40 Gew.-% und gand besonders bevorzugt von 10 bis 25 Gew.-%, bezogen auf die Gesamtmenge an anorganisch (und ggf. organisch) polymerisierbarem Material der Beschichtungsmischung (d.h. auf den Feststoffgehalt des Lacks), eingesetzt. Dabei konnte speziell bei hohen Schichtdicken die Beobachtung gemacht werden, daß geringere Farbstoffgehalte sich vorteilhaft auf die erreichbare Farbtiefe auswirken können, während für einfache, dünne Schichten (z.B. von ca. 5 µm) häufig ein Farbstoffgehalt von etwa 25 Gew.-% optimal ist. Insbesondere dann, wenn Mehrschichtsysteme eingesetzt werden, können deren einzelne Schichten deutlich unter 25 Gew.-% Farbstoff enthalten, das Gesamtsystem dunkelt aufgrund der annähernd additiven Extinktion aller Schichten trotzdem stark ein.

Neben dem Epoxysilan kann die Beschichtungsmischung wie erwähnt auch weitere in das anorganisch-organische Netzwerk aus Siloxan-Bindungen und organischen Verknüpfungen einbaubare Bestandteile enthalten, beispielsweise hydrolysierbare Aluminiumverbindungen der Formel AlR³₃ oder Verbindungen mit der Formel MR³₄ mit M gleich Silicium, Titan, Zirkon, wobei R³ gleich Methoxy, Ethoxy oder n-Propoxy sein kann. Diese und andere geeignete Zusätze sind ebenfalls in der DE 40 20 316 A1 beschrieben.

Anstelle von Epoxysilanen wie oben beschrieben oder zusätzlich dazu können andere organisch polymerisierbare Silane eingesetzt werden, beispielsweise solche, die eine Anhydridgruppe (Succinylatkylsitane) oder eine Aminogruppe (Aminoalkylsilane) tragen und somit als Härterkomponente fungieren können.

Vorzugsweise werden Beschichtungssole, die unter Verwendung photochromer Silane in Kombination mit Hydrolyse-Kondensationsprodukten hergestellt werden, wie sie in der DE 40 20 316 A1 beschrieben sind, mit sehr feinen Metalloxidteilchen, z.B. Siliciumdioxid-Teilchen, mit Durchmessern im nm-Bereich versetzt. Günstig hierfür sind z.B. Bereiche von 1-200 nm, bevorzugt von 5 - 50 nm und besonders bevorzugt von 10 - 30 nm. Die dabei entstehenden Beschichtungen sind besonders kratzfest. Dieses Material kann in einer Menge von bis zu etwa 50 Gew.-%, bezogen auf die Gesamtmenge an anorganisch (und ggf. organisch) polymerisierbarem Material der Beschichtungsmischung, zugegeben werden. Hierfür eignen sich beispielsweise kolloidale Lösungen dieser Metalloxide, z.B. in Wasser oder in Alkohol; das Material kann aber auch als trockenes Pulver zugesetzt und dispergiert werden. Vorzugsweise erfolgt die Zugabe bereits vor der Hydrolyse; das für die Hydrolyse erforderliche Wasser kann dann z.B. dadurch in die Mischung gelangen, daß ein wäßriges Siliciumdioxid-Sol oder anderes Metalloxid-Sol eingesetzt wird.

Die feinen Metalloxidteilchen können mit Hilfe von üblichen oberflächenaktiven Substanzen gegen Agglomeration stabilisiert sein. Zusätzlich oder alternativ können sie oberflächenmodifiziert sein. So können die Oberflächen der Teilchen organische oder organofunktionelle Gruppen wie Alkyl-, Aryl-, Acetyl-, Glycidyl-, Carboxy-, Methacryl-, Alkenylgruppen oder Halogenatome tragen.

In einer speziellen Ausgestaltung der Erfindung werden die feinen Metalloxidteilchen mit Hilfe von Silanen oberflächenmodifiziert, die ihrerseits photochrome Gruppen tragen, also mit Silanen, wie sie voranstehend als erfindungsgemäß definiert sind.

In einer anderen Ausgestaltung der Erfindung können den hydrolytisch kondensierten bzw. kondensierbaren Silanen copolymerisierbare organische Verbindungen zugesetzt werden, die Gruppen aufweisen, welche mit den organischen Gruppen der Silane bzw. deren Kondensaten organische Vernetzungsreaktionen eingehen, wie z.B. organische Anhydride oder Epoxidharze. Hierdurch lassen sich in einigen Fällen überraschenderweise unter UV-A-Strahlung besonders intensive Farbeffekte erzielen. Auch hier ist es wieder möglich, entweder nur mindestens ein eine photochrome Gruppe tragendes Silan oder aber eine Mischung eines oder mehrerer solcher Silane mit weiteren funktionellen Silanen zusammen mit einer oder mehreren organisch vernetzbaren Verbindung(en) einzusetzen. Üblicherweise werden dabei die Silanverbindungen (die ggf. auch als Präpolymere vorliegen können) hydrolysiert und kondensiert, und dem entstandenen Sol wird sodann die organisch vemetzbare Verbindung zugesetzt. Der entstandene Lack wird auf das gewählte Substrat aufgebracht und anschließend organisch polymerisiert, um eine Aushärtung zu bewirken. Die durch die organische Komponente erzielte Quervemetzung bewirkt dabei eine Haftungsverbesserung der ausgehärteten Beschichtung auf dem Substrat, insbesondere auf Polycarbonaten und Polyamiden. Die Menge der einzusetzenden photochromen Silanverbindung(en) liegt auch hier bevorzugt im Bereich von 1 bis 50 Gew.-%, stärker bevorzugt von etwa 10 bis 40 Gew.-%, bezogen auf die Gesamtmenge an anorganisch und organisch polymerisierbarem Material der Beschichtungsmischung. Ganz besonders bevorzugt ist eine Menge bis etwa 25 Gew.-%, bezogen auf den Feststoffgehalt des Lackes.

In bevorzugter Weise wird auch derartigen Beschichtungs-Solen zusätzlich mindestens eine Metallverbindung der allgemeinen Formel AlR³₃ oder MR³₄ zugesetzt, worin R³ die obige Bedeutung besitzt und M Zirkon oder Titan bedeutet. Zusätzlich oder alternativ ist es möglich, dem Beschichtungs-Sol ein oder mehrere ggf. lösliche, schwerflüchtige Oxide zuzusetzen, vorzugsweise B₂O₃, P₂O₅ oder SnO₂.

Besonders geeignete Zusammensetzungen für die vorgenannten Beschichtungen sind auch solche, die eines oder mehrere der oben definierten, photochrome Gruppen tragenden Silane zusammen mit Beschichtungsmaterialien gemäß EP 610 831 A2 enthalten. Vorzugsweise werden dabei Bestandteile, wie sie in Anspruch 1 dieser Druckschrift genannt sind, verwendet, wobei etwa 1 bis 50 Mol-%, bevorzugt etwa 10-40 Mol-% des vernetzbaren, organofunktionellen Silans der dortigen Formel (II) durch ein Silan mit der Formel (1) der vorliegenden Erfindung ersetzt werden. Besonders bevorzugt sind Ausgestaltungen, in denen das organofunktionelle Silan der Formel (II) wie in der EP 610 831 A2 definiert eine Glycidyl- oder (Meth-)Acrylgruppe trägt und die organisch vernetzbare Verbindung ein Epoxidharz oder (Meth-)Acrylat-Oligomer ist. Das photochrome Silan kann in dieser Ausgestaltung der Erfindung ebenfalls eine organofunktionelle Gruppe R' tragen, also eine solche, die wie voranstehend definiert nicht hydrolysierbar, über Kohlenstoff an das Siliciumatom gebunden und ggf. organisch polymerisierbar ist. Wenn es sich dabei um eine organisch polymerisierbare Gruppe R' wie Glycidyl oder (Meth-)Acryl handelt, kann das photochrome Silan zusätzlich über diese Gruppe in das Epoxi- oder (Meth-)Acrylat-Netzwerk eingebaut werden. In den übrigen Fällen wird es ausschließlich über die anorganische Kondensation in das Beschichtungsmaterial eingebaut werden.

Für alle vorgenannten Beschichtungsmaterialen werden bevorzugt Trialkoxysilylalkylfunktionalisierte photochrome Farbstoffe ("photochrome Trialkoxysilane") eingesetzt, da diese eine hohe Löslichkeit in hybriden Systemen besitzen. Besonders die Trialkoxy-Verbindungen eignen sich daher zur Herstellung hybrider Materialien mit Hilfe des bekannten Sol-Gel-Verfahrens, wobei sie in die hybride Matrix einkondensiert und damit Matrixbestandteil werden können. Erfindungsgemäß lassen sich auf diese Weise hybride photochrome Beschichtungsmaterialien erzeugen, die bis zu den meist völlig ausreichenden 25 Gew.-% Farbstoff, ggf. aber sogar mehr enthalten können und somit die für eine kommerzielle Akzeptanz nötigen Farbtiefen erreichen. Aufgrund der kovalenten Einbindung der Chromophore in das Material treten darüber hinaus nur geringe Weichmachereffekte und keine Farbstoffausblühungen auf, wie sie beim Einsatz nicht-funktionalisierter Farbstoffe bereits bei Gehalten von wenigen Gew.-% zu beobachten sind (Variacrol© Red PNO >1 Gew.-%, Variacrol® Blue D >3 Gew.-%).

Um die gewünschten Eigenschaften des Beschichtungslackes einzustellen, können dem Sol vor oder nach Hydrolyse und Kondensation geeignete Zusätze beigegeben werden, z.B. (gegebenenfalls organisch funktionalisierte) Silane wie Tetramethoxysilan oder Phenyltrimethoxysilan. Die Viskosität kann außerdem z.B. durch Zugabe, Entfernen oder Austauschen von Lösungsmittel eingestellt werden. Das hydrolysierte, kondensierte Sol (das als Lack bezeichnet wird) kann sodann mit Hilfe üblicher Beschichtungsverfahren wie Tauch-, Sprüh oder Schleuderbeschichtung auf ggf. ätz-, plasma- oder primerbehandelte Kunststoffsubstrate aufgetragen werden. Die thermische Aushärtung des Schichtmaterials erfolgt üblicherweise bei etwa 90 bis 130°C, wobei die Aushärtungszeiten in der Regel zwischen 20 min und 2 h liegen, aber auch auf Werte darunter oder darüber eingestellt werden können. Entsprechende Überzüge können z.B. auf planen und gewölbten PC-, PA- oder CR39®-Substraten hergestellt werden. Sie weisen eine sehr gute Haftung auf. Man kann Mikrohärten im Bereich von bis zu etwa 250 MPa bei ausgehärteten Schichten (> 120°C, > 1 h) erzielen.

Es hat sich gezeigt, daß mit den erfindungsgemäßen Substanzen hergestellte Beschichtungen hinsichtlich ihres photochromen Effektes sowie ihrer tribologischmechanischen Eigenschaften eine deutliche Verbesserung gegenüber den dem Stand der Technik entsprechenden Beschichtungssystemen darstellen. Die Beschichtungen zeigen eine kräftige Eindunktung.

In einer besonderen Ausgestaltung der Erfindung werden den Beschichtungsmaterialien zusätzlich zu den silylierten Chromophoren auch noch rein organische photochrome Farbstoffe zugesetzt. Dies kann aus mehreren Gründen vorteilhaft sein: So kann der Zugang zu in bestimmter Weise gefärbten silylierten Photochromophoren sehr aufwendig sein. Soll ein Spektralbereich abgedeckt werden, der eine Mischung aus verschiedenen Farbtönen erfordert, kann es ausreichend sein, wenn einer der Farbstoffe in die Matrix eingebaut ist, während ein zweiter als organischer Farbstoff vorliegt. Des weiteren kann es aus photochemischen Gründen vorteilhaft sein, nicht-silylierte Farbstoffe allein oder zusammen mit silylierten in einzelnen Schichten eines Laminates einzusetzen. Der nichtsilylierte photochrome Farbstoff ist vorzugsweise ein einer Menge von 10 bis 100 Gew.-% ,bezogen auf die Silan-Verbindung der Formel (1), in erfindungsgemäßen Material vorhanden.

Die rein organischen Farbstoffe, die für die voranstehend genannte Ausgestaltung der Erfindung geeignet sind, sind nicht beschränkt; sie können aus dem Kreis der Verbindungsgruppen ausgewählt werden, die weiter oben als photochrome Ausgangsmaterialien für silylierte Farbstoffe genannt sind.

In speziellen Ausgestaltungen der Erfindung kann die UV-Stabilität noch weiter verbessert und/oder eine noch höhere Kratzfestigkeit (Mikrohärte, Abriebfestigkeit) der Beschichtungen erreicht werden, indem unterschiedliche funktionelle Schichten zu Mehrschichtsystemen oder Laminaten verbunden werden, die sich durch den Einsatz der wie oben definierten photochromen Silane herstellen lassen.

Die erfindungsgemäßen photochromen Beschichtungen können dabei ggf. überbeschichtet bzw. laminiert werden, ohne daß dies zu Beeinträchtigungen der Photoaktivität führen würde. Dies kann z.B. wünschenswert sein, wenn die Oberfläche des zu beschichtenden Gegenstandes (z.B. einer Linse) eine verbesserte Mikrohärte und/oder Abriebfestigkeit aufweisen soll. Dabei kann die Überbeschichtung ihrerseits ggf. wiederum photochrome Eigenschaften aufweisen.

Weiterhin kann es vorteilhaft sein, wenn rein organische Farbstoffe (zusätzlich zu silylierten Farbstoffen oder aber ausschließlich) im Basislack eines Zweischichtsystems oder in Laminaten eingesetzt werden, während silylierte Photochrome in der Deckschicht vorhanden sind. Denn zum einen spielen die Weichmachereffekte, wie sie oben für den Zusatz von organischen Farbstoffen in Beschichtungssysteme der vorliegenden Art beschrieben wurden, keine wesentliche Rolle, wenn die photochrome Schicht durch eine weitere Schicht abgedeckt ist, deren mechanische Eigenschaften durch die Verwendung ausschließlich silylierter Farbstoffe wesentlich besser sind, oder sich innerhalb eines Laminates befindet. Das Gesamtsystem besitzt damit die Kratzfestigkeit und die Härte der äußeren Schicht bzw. des abdeckenden Laminat-Materials. Zum anderen schalten nicht-silylierte Farbstoffe schneller als ihre silylierten Derivate. Dies führt dazu, daß bei einem Zweischichtsystem der genannten Art die untere Schicht schneller eindunkelt als die obere (die Eindunklung erscheint aber trotzdem homogen). Das Resultat ist eine tiefere Einfärbung als in einem Zweischichtsystem mit ausschließlich silylierten Farbstoffen, da in letzterem Fall der/die Farbstoff(e) der oberen Schicht durch ihre Aktivierung das einfallende UV-Licht schwächen. Damit steht für die Farbstoffe der unteren Schicht weniger UV-Intensität zur Verfügung; sie schalten mit geringerer Intensität.

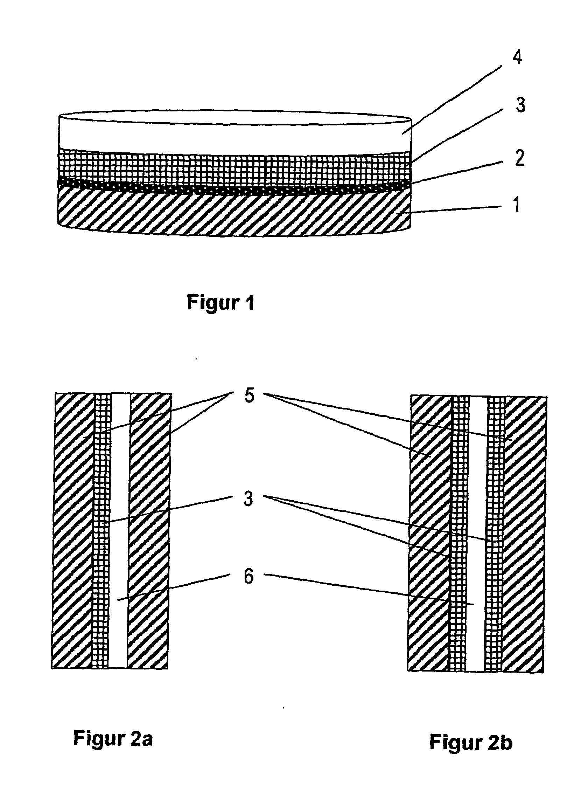

**Figur 1** zeigt ein zweischichtiges System. Auf einem Substrat 1, bei dem es sich z.B. um eine Linse oder dgl. handeln kann, kann ggf. zur Verbesserung der Haftung zwischen Beschichtung und Substrat eine Primerschicht 2 aufgebracht werden. Es folgt die photochrome Beschichtung 3. Auf dieser ist der kratzfeste Überzug 4 angeordnet. Der Überzug kann auch geeignet bzw. vorgesehen sein, um die UV-Stabilität der erfindungsgemäßen Beschichtungen zu verbessern. Als Überbeschichtung kann ein Überzug verwendet werden, der aus Formulierungen gemäß EP 610 831 A2 oder DE 40 20 316 A1 hergestellt wird. Bevorzugt wird ein Überzug, der aus einem wie in der DE 40 20 316 A1 beschriebenen Sol erzeugt wird, das mit nanoskaligen Metalloxidteilchen modifiziert wurde. Hierfür können beispielsweise SiO₂-Sole verwendet werden, wie sie im Handel erhältlich sind. Der Anteil dieser Metalloxidteilchen am gesamten Feststoffgehalt des Beschichtungssols kann z.B. bis zu 50 Gew.-% betragen. In einer anderen bevorzugten Variante wird ein aluminiumhaltiger Überzug eingesetzt, der aus einem wie in der EP 610 831 A2 beschriebenen Sol erzeugt wird.

Zweischichtsysteme mit kratzfesten Überzügen weisen gegenüber solche photochromen Schichten, die gelöste photochrome Farbstoffe in der äußeren Schicht enthalten, um 50-200% gesteigerte Mikrohärten auf.

Die unterschiedlichen Schichten können nacheinander aufgebracht und in einem Schritt gehärtet werden; sie können aber vorzugsweise jede für sich aufgebracht und in geeigneter Weise gehärtet werden, z.B. durch thermische Härtung.

Ggf. kann die Lebensdauer der photochromen Farbstoffe durch den Zusatz von UV-Absorbern, Radikalfängern und/oder "Excited-State Quenchem zur Beschichtungsmischung , die ggf. ebenfalls kovalent in der Polymermatrix verankert sein können, erhöht werden.

Als Stabilisatoren sind beispielsweise sterisch gehinderte Amine und Enamine, Benztriazole, Anhydride, Pyrazolone, Cumarine und/oder Precocene geeignet, die ggf. eine hydrolyseempfindliche und damit kondensierbare Silylgruppe aufweisen können.

Sowohl die photochromen Silane als auch die (ggf. silylierten) UV-Stabilisatoren werden vorzugsweise in geeigneten Lösungsmitteln wie cyclischen Ethem oder Glycolethern gelöst, bevor sie zur Reaktionsmischung gegeben werden.

Da die Reaktion der aktivierten Form mit Luftsauerstoff den Hauptmechanismus für den photochemischen Abbau photochromer Farbstoffe darstellt, kann eine deutliche Verbesserung der UV-Stabilität auch in Glas- und/oder Kunststofflaminaten, wie sie in der Automobilindustrie und für Gebäudeverglasungen eingesetzt werden, erzielt werden. Die **Figuren 2a und 2b** zeigen zwei mögliche Arten des Laminataufbaus. Das Laminat der Fig. 2a ist asymmetrisch aufgebaut. Auf einem Glas- oder Kunststoffsubstrat 5 ist die photochrome Beschichtung 3 aufgebracht. Auf dieser befindet sich eine weitere Schicht 6, z.B. eine PVB-Folie. Das Laminat wird durch ein zweites Substrat (aus Glas oder Kunststoff) abgeschlossen. Der Laminataufbau gemäß Fig. 2b ist dagegen symmetrisch; hier sind zwei photochrom beschichtete Substrate 3', 3" mit einer dazwischenliegenden Folie 6 gegeneinander laminiert worden. In beiden Fällen schützt das gasundurchlässige Substrat die photoaktive(n) Schicht(en) vor dem Zutritt von O₂. Unter zusätzlichem Einsatz von entsprechenden Stabilisatoren werden Lebensdauern von bis zu 1000 h im Bewitterungstest (trockener Suntest) erreicht.

Die erfindungsgemäßen Beschichtungen eignen sich beispielsweise für ophthalmische Linsen, z.B. aus Kunststoffen wie Poly(diethylenglycol)bis-allylcarbonat. Dabei kann nur eine photochrome Beschichtung, oder es können die vorgenannten Mehrfachschichten aufgebracht werden. Weiterhin eignen sich die Beschichtungen für andere Augenschutzapplikationen wie Sonnenbrilfen, Skibrillen oder Visiere, die ebenfalls aus Kunststoffen wie Poly(diethylenglycol)bis-allylcarbonat, Bisphenol A Polycarbonat oder Polyamid hergestellt sein können, aber auch aus Mineral- oder Silicatglas. Alle Gegenstände für Augenschutzapplikationen können in besonders vorteilhafter Weise mit einer im sichtbaren Spektralbereich antireflektierenden Schicht versehen sein, wie sie z.B. aus der WO 97/28467 bekannt ist. Es hat sich nämlich herausgestellt, daß Antireflexbeschichtungen den Zutritt von Sauerstoff, die Diffusion von Sauerstoff in die photochrome Schicht, verzögern oder hemmen. Im Effekt verbessert dies die Lebensdauer der Funktionsfähigkeit der photochromen Schichten bedeutend.

Die Beschichtungen eignen sich ferner für Verbundgläser, auf/in die sie aufgebracht/eingearbeitet werden können. Solche Verbundgläser können z.B. Schichten aus Mineral- oder Silicatglas oder auch aus Kunststoffen aufweisen und ggf. im sichtbaren Spektralbereich antireflektierend und/oder tR-reftektierend beschichtet sein. Einsatzgebiete solcher Gläser sind z.B. Automobil- und Gebäudeverglasungen. Auch diese Systeme können Antireflexbeschichtungen wie oben erwähnt aufweisen, wodurch die Funktionsdauer der photochromen Schichten verlängert werden kann. In einer speziellen Ausgestaltung der Erfindung können diese im Randbereich eine Emailschicht aufweisen, wobei die erfindungsgemäße photochrome Beschichtung hierauf ebenso gut haftet wir auf den vorgenannten Substraten. Die Verbundglas-Laminate können asymmetrisch oder symmetrisch aufgebaut sein, wie in Fig. 2a und 2b beispielhaft gezeigt. Die darin vorhandenen Gläser können jeweils einseitig oder beidseitig beschichtet sein; ggf. kann auf die Beschichtung eines zweiten Glases verzichtet werden. Aus Gründen der Abschirmung gegenüber Sauerstoff sind die photochromen Schichten vorzugsweise innenliegend. Weiterhin ist es aus diesem Grunde bevorzugt, daß das Laminat an geeigneten Stellen Kunststoffschichten, z.B. Polyvinylbutyrat-Folien (PVB-Folien) mit O₂-Barrierewirkung, enthält.

Die Erfindung soll nachstehend anhand von Beispielen näher erläutert werden.

### AUSFÜHRUNGSBEISPIELE

### A. Herstellung und Applikation von photochromen Basislacken

### Beispiel A.1

### a) Herstellung der Farbstofflösung

Ein hydroxyfunktionalisiertes Spiroindolinonaphthooxazin mit der Formel 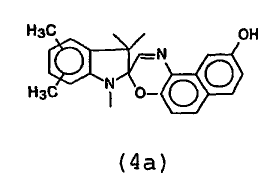 wurde hergestellt, indem 60 g 2,7-Dihydroxy-1-nitrosonaphthalin mit 60 g einer 1/1-Mischung aus 2-Ethylen-1,3,3,4,5-pentamethylindolin und 2-Ethylen-1,3,3,5,6-pentamethylindolin und 150 ml Toluol unter Rühren versetzt wurden. Die Mischung wurde unter Stickstoff für 4 h bei 80 °C unter Rückflußkühlung gerührt. Danach wurde filtriert und die Lösung konzentriert. Man erhielt 45 g eines grauen Rohproduktes, das durch Umkristallisation aus Toluol gereinigt wurde. Das aufgereinigte Produkt (35 g) wurde mittels GC-MS identifiziert (M = 372).

10,1 g der Verbindung (4a) wurden mit 7,3 g 3-Isocyanatopropyltriethoxysilan, 60 ml Toluol sowie 5 ml Triethylamin als Katalysator unter Rühren versetzt. Die Mischung wurde unter Stickstoffatmosphäre für 14 h bei 70 °C unter Rückflußkühlung gerührt. Die Reaktionslösung wurde zunächst aufkonzentriert. Durch langsame Kühlung kristallisierte das Produkt. Nach Abfiltration und Trocknung erhielt man 8 g eines Produktes der oben dargestellten Formel (4), das mittels HPLC und GC-MS identifziert wurde (M = 619).

Mit 3,42 g des silylierten Spiro-indolino-naphthooxazins der Formel (4) wurde eine gesättigte Lösung in Tetrahydrofuran (THF) hergestellt.

### b) Herstellung und Applikation der Beschichtungslösung

23,63 g 3-Glycidyloxypropyltrimethoxysilan (GPTMS) wurden mit der nach a) hergestellten Farbstofflösung und 0,41 g N-Methylimidazol versetzt. Zur resultierenden tiefgefärbten Lösung wurden 2.70 g destilliertes H₂O gegeben. Nach einer Rührzeit von einigen Stunden wurde mit 15,22 g (3-Triethoxysilylpropyl)-Bernsteinsäureanhydrid (TESBA) versetzt und abermals gerührt. Zur Einstellung der Lackeigenschaften wurden dann 3,65 g n-Propanol zugegeben. Der Lack wurde durch Schleuderbeschichtung auf ätz- und plasmabehandelte CR39®-Substrate aufgetragen. Die thermische Aushärtung des Schichtmaterials erfolgte bei 120°C für 2 h. Entsprechend hergestellte Überzüge waren farblos und wiesen sehr gute Haftung auf (Tape-Test nach ASTM 3359: B 5). Die Mikrohärten lagen im Bereich um 100 MPa. Die Überzüge dunkelten bei Aktivierung durch UV-A-Bestrahlung zu einem tiefblauen Farbton ein.

### Beispiel A.2

### a) Herstellung der Farbstofflösungen

Lösung 1: Mit 2,28 g des silylierten Spiro-indolino-naphthooxazins mit der Formel (4) wurde eine gesättigte Lösung in THF hergestellt.
Lösung 2: Mit 912 mg 3,3-Di(4-methoxy)phenyl-8'-methoxy-3H-naphto[2.1-b]pyran wurde eine gesättigte Lösung in THF hergestellt

### b) Herstellung und Applikation der Beschichtungslösung

23,63 g GPTMS wurden mit der nach a) hergestellten Farbstofflösung 1 versetzt. Die resultierende tiefgefärbte Lösung wurde analog zu Beispiel A.1 mit H₂O und TESBA versetzt und gerührt. Anschließend wurde Farbstofflösung 2 zugegeben. Die restliche Verarbeitung und Applikation erfolgte wie in Beispiel A.1 beschrieben. Die resultierenden Schichten zeigten ebenfalls sehr gute Haftungseigenschaften (B 5) und dunkelten bei Aktivierung durch UV-A-Bestrahlung zu einem kräftigen violetten Farbton ein.

### Beispiel A.3

### a) Herstellung der Farbstofflösungen

Ein hydroxyfunktionalisiertes Chromen mit der Formel (5a) 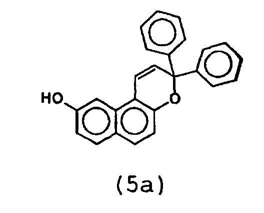 wurde wie folgt hergestellt: In einem Stahlautoklaven wurden 20 g β-Phenylzimtaldehyd und 16 g 2,7-Dihydroxynaphthalin sowie 27 g Titan(IV)tetraethoxid als Katalysator in 80 ml Toluol gelöst. Diese Mischung wurde für 6 h auf 105 °C erhitzt. Das Reaktionsprodukt wurde mit 200 ml Toluol verdünnt, etwas Wasser und 1 g Oxalsäure zugegeben und für 1 h auf 60 °C erhitzt. Anschließend wurde die Mischung filtriert. Zur organischen Phase wurden 10 g Aktivkohle gegeben und für 1 h auf 60 °C erhitzt. Schließlich wurde die Lösung filtriert und aufkonzentriert wodurch das Produkt auskristallisierte. Man erhielt 28,9 g eines Produktes der Struktur (5a), das mittels GC-MS identifiziert wurde (M = 350).

10 g der Verbindung (5a) wurden mit 8,05 g 3-Isocyanatopropyltriethoxysilan, 30 ml Toluol, sowie 3 ml Triethylamin als Katalysator unter Rühren versetzt. Die Mischung wurde unter Rückflußkühlung und Stickstoffatmosphäre für 20 h auf 80 °C erhitzt. Die Reaktionslösung wurde zunächst aufkonzentriert, dann langsam gekühlt. Man erhielt 15 g eines Produktes der Struktur (5), das mittels HPLC und GC-MS identifziert wurde (M = 597).

Ein hydroxyfunktionalisiertes Spiroisoindolinonaphthooxazin mit der Formel (6a) 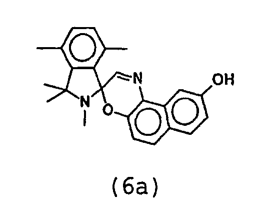 wurde wie folgt hergestellt. 100 g 1,1,2,4,7-Pentamethyl-3-methylenisoindoliniumiodid wurden in 50 ml Toluol suspendiert. Zu dieser Suspension gab man 100 ml einer wässrigen 20 %igen NaOH-Lösung. Die Mischung wurde unter Stickstoff für 30 min bei 40 °C gerührt. Die organische Phase wurde abgetrennt, in einem 500 ml Kolben vorgelegt und mit 62 g 2,7-Dihydroxy-1-nitroso-naphthalin versetzt. Die entstehende Lösung wurde 1 Stunde bei 60 °C unter Rückflußkühlung gerührt, danach filtriert und mit 250 ml Toluol verdünnt. Anschließend gab man 5 g Aktivkohle zu und erhitzte auf 80 °C für 30 min. Schließlich wurde die Lösung abermals filtriert, aufkonzentriert und dann gekühlt. Es präzipitierten 35 g eines grauen Feststoffes. Das Rohprodukt wurde durch Umkristallisation aus Toluol gereinigt. Man erhielt 27 g eines Produktes der Struktur (6a), das mittels GC-MS identifiziert wurde (M = 372).

12 g der Verbindung (6a) wurden mit 50 ml Toluol, 8 g 3-Isocyanatopropyltriethoxysilan sowie 5 ml Triethylamin als Katalysator unter Rühren versetzt. Die Mischung wurde unter Stickstoffatmosphäre für 3 h bei 80 °C unter Rückflußkühlung gerührt. Nach Aufkonzentration und langsamer Abkühlung des Konzentrats fiel ein Niederschlag aus, der abfiltriert und getrocknet wurde. Man erhielt 15 g eines Produktes der Struktur (6), das mittels HPLC und GC-MS identifziert wurde (M = 619).

Lösung 1: Mit 2,20 g des silylierten Chromens mit der Formel (5) und 2,28 g des silylierten Spiro-isoindolino-naphthooxazins der Formel (6) wurde eine gesättigte Lösung in THF hergestellt.
Lösung 2: Die Herstellung der Lösung erfolgte wie unter Beispiel A.2 beschrieben.

### b) Herstellung und Applikation der Beschichtungslösung

23,63 g GPTMS wurden analog zu Beispiel A.2 mit den nach a) hergestellten Farbstofflösungen versetzt, mit H₂O und TESBA umgesetzt und appliziert. Die resultierenden Schichten zeigten sehr gute Haftungseigenschaften (B 5) und eine Mikrohärte von 120 MPa (120°C, 1 h). Bei Aktivierung durch UV-A-Bestrahlung war die Eindunklung zu einem nahezu neutralen, grün-grauen Farbton zu beobachten.

### Beispiel A.4

### a) Herstellung der Farbstofflösungen

Lösung 1: Mit 2,28 g des silylierten Spiro-isoindolino-naphthooxazins mit der Formel (6) und 3,31 g des silylierten Chromens mit der Formel (5) wurde eine gesättigte Lösung in THF hergestellt.
Lösung 2: Mit 912 mg 3,3-Di(4-methoxy)phenyl-8'-methoxy-3H-naphto[2.1-b]pyran wurde eine gesättigte Lösung in THF und Diethylenglycoldimethylether (Diglyme), gemischt in einem Gewichtsverhältnis von 2:1, hergestellt.

### b) Herstellung und Applikation der Beschichtungslösung

23,63 g GPTMS wurden analog zu Beispiel A.2 mit den nach a) hergestellten Farbstofflösungen versetzt, mit H₂O und TESBA umgesetzt und appliziert. Die resultierenden Schichten zeigten gute bis ausgezeichnete primäre Haftung (B 4 - B 5) auf Kunststoffsubstraten. Bei Aktivierung durch UV-A-Bestrahlung war eine kräftige Eindunklung zu einem nahezu neutralen braun-grauen Farbton zu beobachten.

### Beispiel A.5

### a) Herstellung der Farbstofflösungen

Die Herstellung beider Lösungen erfolgte wie unter Beispiel A.4 beschrieben.

### b) Herstellung und Applikation der Beschichtungslösung

23,63 g GPTMS wurden analog zu Beispiel A.4 mit den nach a) hergestellten Farbstofflösungen versetzt und weiterverarbeitet. In das Gemisch wurden 7,71 g Hexahydrophthalsäureanhydrid eingerührt. Die weitere Verarbeitung und Applikation erfolgte wie unter Beispiel A.1 beschrieben. Das Material wurde durch Tauchbeschichtung auf gewölbte Linsen aus CR39®, Bisphenol A Polycarbonat und Polyamid aufgetragen. Die resultierenden Schichten wiesen erhöhte Schichtdicken einhergehend mit verringerten Härten bei sehr guten Haftungseigenschaften auf. Bei Aktivierung der farblosen Schichten durch UV-A-Bestrahlung war eine kräftige Eindunklung zu einem nahezu grauen Farbton zu beobachten. Die Farbtiefe war im Vergleich zu TESBA-haltigen Schichten etwas erhöht.

### Beispiel A.6

### a) Herstellung der Farbstofflösung

Mit 14,58 g des silylierten Spiro-indolino-naphthooxazins mit der Formel (4) oder 14,58 g des silylierten Spiro-isoindolino-naphthoxazins mit der Formel (6) wurde eine gesättigte Lösung in THF hergestellt.

### b) Herstellung und Applikation der Beschichtungslösung

Zu einem Gemisch aus 200,89 g GPTMS, 22,14 g 3-Aminopropyltriethoxysilan und der nach a) hergestellten Farbstofflösung wurden 22,47 g einer gekühlten, 72,9 %igen Lösung von Zr(OPr)₄ in n-Propanol, der die äquimolare Menge Acetessigester zugesetzt wurde, gegeben. Nach einer Rührzeit von 10 min erfolgte die Zugabe von 58,85 g destilliertem Wasser unter Kühlung. Das Hydrolysat wurde über Nacht gerührt und anschließend einem Lösungsmittelaustausch mit 10-30 Gew.% Diglyme unterworfen.

Der Lack wurde durch ein Sprühbeschichtungsverfahren in Schichtdicken von 20-30 µm auf Mineralglassubstrate aufgetragen. Die thermische Aushärtung des Schichtmaterials erfolgte bei 120 °C, mit einer Aushärtungszeit von 30 min. Die resultierenden rißfreien, farblosen und schwitzwasserbeständigen (nach DIN 50017: Gt 0) Überzüge wiesen sehr gute Haftungseigenschaften auf (B 5). Bei Aktivierung durch UV-A-Bestrahlung dunkelten die Schichten mit tiefblauer Farbe ein.

### Beispiel A.7

### a) Herstellung der Farbstofflösung

Mit 14,58 g des silylierten Spiro-indolino-naphthooxazins mit der Formel (4) und 14,10 g des silylierten Chromens mit der Formel (6) wurde eine Lösung in 50,0 g THF hergestellt.

### b) Herstellung und Applikation der Beschichtungslösung

200.89 g GPTMS wurden analog zu Beispiel A.6 mit 3-Aminopropyltriethoxysilan, der nach a) hergestellten Farbstofflösung sowie mit Zr(OPr)₄ umgesetzt, verarbeitet und appliziert.
Das Leistungsverhalten der resultierenden Überzüge glich den nach Beispiel A.6 erhaltenen Proben. Bei Aktivierung durch UV-A-Bestrahlung war eine kräftige Eindunklung zu einem tiefgrünen Farbton zu beobachten.

### Beispiel A.8

### a) Herstellung der Farbstofflösung

Die Herstellung der Lösung erfolgte wie unter Beispiel A.6 beschrieben.

### b) Herstellung und Applikation der Beschichtungslösung

Eine analog zu Beispiel A.6 hergestellte Beschichtungslösung, die jedoch 129,99 g GPTMS und 48,09 g Vinylmethyldiethoxysilan (VMDEO) enthielt, diente zur Sprühbeschichtung von Mineralglassubstraten. Die thermische Aushärtung des Materials erfolgte ebenfalls wie unter Beispiel A.6 beschrieben. Die resultierenden Überzüge wiesen Schichtdicken bis zu 40 µm auf, waren rißfrei und zeigten keine Einbußen hinsichtlich ihrer Schwitzwasserstabilität und Haftung. Nach UV-A-Bestrahlung war aufgrund der höheren Schichtdicke im Vergleich zu den in Beispiel A.6 erhaltenenen Schichten eine erneute Steigerung der Farbtiefe zu beobachten.

### Beispiel A.9

### a) Herstellung der Farbstofflösung

Mit 2,98 g des silylierten Spiro-isoindolino-naphthooxazins mit der Formel (6) wurde eine gesättigte Lösung in THF und Diethylenglycoldimethylether (Diglyme), gemischt in einem Gewichtsverhältnis von 2:1, hergestellt.

### b) Herstellung und Applikation der Beschichtungslösung

23,63 g GPTMS wurden mit der nach a) hergestellten Farbstofflösung versetzt. In die resultierende tiefgefärbte Lösung wurden 18,55 g des kommerziell erhältlichen SiO₂-Sols LUDOX TM50 (DuPont) und 0,31 g destilliertes Wasser eingerührt. Nach einigen Stunden Rührzeit erfolgte die Zugabe von 1,26 g Tetramethoxysilan (TMOS) und 17,78 g TESBA.
Die Applikation und Aushärtung des Schichtmaterials erfolgte wie in Beispiel A.1 beschrieben. Entsprechend hergestellte Überzüge auf planen und gewölbten CR39®-Substraten wiesen keinerlei Trübung oder Färbung auf. Die Mikrohärten lagen im Bereich um 200 MPa bei ausgehärteten Schichten (> 120°C, > 1 h). Die Überzüge zeigten primär als auch nach dreistündiger Lagerung in kochendem Wasser sehr gute Haftung (B 5). Bei Aktivierung durch UV-A-Bestrahlung wurde ein tiefblauer Farbton beobachtet.

### B. Herstellung von kratzfesten Lack-Mehrschichtsystemen und Glas/Kunststoff-Laminaten

### Beispiel B.1

Die gemäß Beispiel A.1 mit einem photochromen Überzug ausgerüsteten Kunststoffsubstrate wurden mit einem kratzfesten aluminiumhaltigen Decklack, wie er in der EP 610831 A1 beschrieben ist, überbeschichtet. Hierzu wurden 24,63 g Al(O^{s}Bu)₃ in 27,0 g 2-Butanol gelöst und der Lösung 13,01 g Acetessigester unter Kühlung zugetropft. Nachdem 15 Minuten gerührt wurde, erfolgte die Zugabe von 76,81 g GPTMS, 9.92 g Phenyltrimethoxysilan und 5,53 g 3-Aminopropyltriethoxysilan. Nacheinander wurden nun im Abstand von mindestens 5 Minuten folgende Wassermengen unter Kühlung zugegeben: 1,69 g, 3,38 g und 27,03 g. Nach etwa zweistündigem Rühren erfolgte die Zugabe von 2,14 g Araldit GY 260 (Ciba-Geigy) und 8,57 g n-Propanol. Nach kurzem Rühren war der Lack gebrauchsfertig.

Der Decklack wurde durch Schleuderbeschichtung auf die bei 80° C für 10 min zwischengehärteten Basisschichten aufgetragen. Die thermische Endhärtung des mehrschichtigen Lacksystems erfolgte bei 120°C für 2 h. Die resultierenden Doppelschichtsysteme (siehe Skizze 1) zeigten selbst nach 3 h in kochendem Wasser sehr gute Grund- und Zwischenschichthaftung (B 5) und keine Rißbildung. Die Überbeschichtung resultierte in einer Erhöhung der Mikrohärte auf bis zu 250 MPa bei gleichbleibendem, photochromen Effekt.

### Beispiel B.2

Die gemäß Beispiel A.2 mit einem photochromen Überzug ausgerüsteten Kunststoffsubstrate wurden mit einem kratzfesten aluminiumhaltigen Decklack gemäß Beispiel B.1 überbeschichtet. Die Härtung beider Schichten erfolgte wie in Beispiel B.1 beschrieben. Für mehr als 1 h endgehärtete Proben zeichneten sich durch sehr gutes Haftungs- und Rißverhalten (Tape-Test: B 5 primär sowie nach 3 h Kochtest), eine Mikrohärte über 200 MPa, hohe Abriebfestigkeit im Stahlwolle-Test (nach ISO draft 15258: 5 *star*) sowie eine hohe Bewitterungsbeständigkeit (Nass-UV-Bewitterung) aus. Bei Aktivierung durch UV-A-Bestrahlung dunkelten die Substrate mit kräftiger violetter Farbe ein, die sich in Farbton und -tiefe im Vergleich zu den nicht-kratzfest ausgerüsteten Proben nicht signifikant unterschieden.

### Beispiel B.3

Die gemäß Beispiel A.2 mit einem photochromen Überzug ausgerüsteten Kunststoffsubstrate wurden mit einem kratzfesten aluminiumhaltigen Decklack gemäß Beispiel B.1 überbeschichtet. Dem Decklack wurde vor der Wasserzugabe das silylierte Chromen (5) in einer Menge die einem Gewichtsanteil von 7,25 % bez. auf den Feststoffgehalt des Lackes entspricht, zugesetzt.

### Beispiel B.4

Die gemäß Beispiel A.4 mit einem photochromen Überzug ausgerüsteten Kunststoffsubstrate wurden mit einem kratzfesten partikelhaltigen Decklack, wie er in Beispiel A.8 beschrieben ist, überbeschichtet. Die Härtung beider Schichten erfolgte gemäß Beispiel B.1. Die resultierenden Doppelschichtsysteme wiesen sehr gute initiale Grund- und Zwischenschichthaftungs-eigenschaften auf CR39® auf (B 5). Bei 130°C für 20 min endgehärtete Proben zeigten eine Mikrohärte um 150 MPa. Durch den in der Kratzfestbeschichtung enthaltenen Farbstoff wurde die photochrome Eindunklung der beschichteten Proben darüber hinaus signifikant verstärkt. Der Farbton änderte sich im Vergleich zu den nicht kratzfest ausgerüsteten Proben von nahezu neutral zu intensiv grünblau.

### Beispiel B.5

Die Herstellung des Zweischichtsystems erfolgte gemäß Beispiel B.4, jedoch unter Verwendung des in Beispiel A.5 beschriebenen Basislackes. Die resultierenden Proben unterschieden sich bezüglich ihrer Mikrohärte und Primärhaftung nicht wesentlich von den gemäß Beispiel B.4 hergestellten Proben. Im Vergleich zu Beispiel B.4 wiesen die Proben einen ausgeprägteren photochromen Effekt auf, der auf die erhöhte Schichtdicke und geringere Quervernetzung der Basisbeschichtung zurückzuführen war.

### Beispiel B.6

Eine nach Beispiel A.7 beschichtete Mineralglasplatte wurde mit einer PVB-Folie und einer unbeschichteten Glasplatte so laminiert, daß sich die photochrome Schicht innerhalb des Laminates, zwischen beschichtetem Substrat und PVB-Folie, befand (asymmetrischer Aufbau, siehe Figur 2a). Die Laminate zeigten weder Riß- bzw.

Blasenbildung noch Delaminationserscheinungen. Die photochrome Schicht erwies sich als chemisch und verfahrenstechnisch unproblematisch. Das photochrome Leistungsverhalten der Schichten wurde demgemäß durch das Laminationsverfahren nicht beeinträchtigt. Aufgrund des gehinderten Sauerstoffzutritts und der Abschirmung kurzwelliger Lichtanteile durch das umgebende Glas wiesen die Proben eine erhöhte photochemische Stabilität auf. So wurden nach 400 h ständiger UV-Bestrahlung noch etwa 65 % der ursprünglichen Aktivität des enthaltenen blau schaltenden Farbstoffes (λₘₐₓ = 620 nm) gefunden.

### Beispiel B.7

Zwei nach Beispiel A.7 beschichtete Mineralglasplatten wurden mit einer PVB-Folie so laminiert, daß sich die photochromen Schichten innerhalb des Laminates, jeweils zwischen den Substraten und der PVB-Folie befanden (symmetrischer Aufbau, siehe Figur 2b). Die Laminate zeichneten sich analog zu den asymmetrisch aufgebauten Systemen aus Beispiel B.6 durch Blasen-, Riß- und Delaminationsfreiheit aus. Aufgrund des doppelten Schichtaufbaus war der durch UV-Bestrahlung ausgelöste Transmissionsrückgang etwa doppelt so stark ausgeprägt wie in asymmetrischen Laminaten. Die photochemische Stabilität erwies sich als bemerkenswert hoch. Selbst nach 400 h ständiger UV-Bestrahlung zeigten die Proben noch etwa 90 % ihrer ursprünglichen Aktivität bei λₘₐₓ = 620 nm. Erst nach über 1000 h Bestrahlung war ein Rückgang auf 50% der Ausgangsaktivität erreicht.

## Patentansprüche

1. Material für hybridpolymere, photochrome Beschichtungen mit:
(a) 1 bis 100 Gew.-%, bezogen auf die Summe der hydrolytisch kondensierbaren, organisch polymerisierbaren und polymeren Bestandteile des Materials, Silan der Formel (1):
XₐSi(R')_{b}(A-Y-P)_{4-a-b} (1)
erhältlich durch die Umsetzung von Silanen der Formel (2)
XₐSi(R')_{b}(A-Y')_{4-a-b} (2)
mit photochromen Farbstoffen der Formel (3)
Q-P (3),
und
(b) 0 bis 99 Gew.-%, bezogen auf die Summe der hydrolytisch kondensierbaren, organisch polymerisierbaren und polymeren Bestandteile des Materials, Silan der Formel (7):
XₐSi(R')₄₋ₐ (7)
wobei in den obigen Formeln
X gleich oder verschieden ist und eine hydrolysierbare Gruppe darstellt,
R' gleich oder verschieden ist und eine nicht-hydrolysierbare, über Kohlenstoff an das Silicium gebundene, ggf. organisch polymerisierbare Gruppe ist,
A vorhanden sein kann oder nicht und einen Spacer darstellt,
Y' eine mit der Gruppe Q reaktive Gruppe darstellt,
Q eine mit der Gruppe Y' reaktive Gruppe darstellt,
Y eine Gruppe ist, die durch Umsetzung der Gruppen Y' und Q erhältlich ist,
P ein eine photochrome Gruppe tragender Rest ist,
a eine ganze Zahl von 1 bis 3 bedeutet,
b eine ganze Zahl von 0 bis 2 bedeutet und
a+b 2 oder 3 sind,
wobei die Silane (1) und (7) in monomerer Form oder teilweise oder vollständig hydrolytisch kondensiert und/oder organisch prepolymerisiert vorliegen können,
mit der Maßgabe, daß
entweder
(i) im Silan der Formel (1) b ungleich 0 ist und R' eine organisch polymerisierbare Gruppe ist,
und/oder
(ii) im Silan der Formel (7) mindestens eine Gruppe R' organisch polymerisierbar ist,
und fakultativ
(iii) das Material weiterhin mindestens eine copolymerisierbare organische Verbindung enthält,
wobei nur für den Fall, daß die Bedingung (i) erfüllt ist, das Silan der Formel (1) einen Anteil von 100 Gew.-% haben kann,
und daß die Silane (1) und (7) so gewählt werden, daß keine ausschließlich cyclischen oder linearen Polykondensate entstehen können.

2. Material nach Anspruch 1, worin die Silane der Formeln (1) und (7) in cokondensierter Form vorliegen, erhältlich durch Herstellen einer Lösung des Silans der Formel (1) in einem geeigneten Lösungsmittel, ggf. Lösen oder Suspendieren des Silans der Formel (7) in einem geeigneten Lösungsmittel, Vermischen der Lösung des Silans der Formel (1) mit dem Silan der Formel (7) und Zugeben von Wasser und ggf. einem Katalysator.

3. Material nach Anspruch 1 oder 2, worin
X Wasserstoff, Halogen, Hydroxy oder ggf. substituiertes Alkoxy mit 1 bis 4 Kohlenstoffatomen ist,
R' Alkyl oder Alkenyl mit 1 bis 12 Kohlenstoffatomen in der Hauptkette darstellt, z.B. Vinyl, wobei diese Reste ggf. substituiert sind und/oder durch O- oder S-Atome oder die Gruppe NR¹ unterbrochen sein können,
A ein geradkettiges Alkylen mit 2 bis 8 Kohlenstoffatomen darstellt und vorzugsweise n-Propylen ist,
Y -O- oder -NHC(O)O- ist,
P ausgewählt ist unter Spiroindolinonaphthooxazinen, Spiroisoindolinonaphthooxazinen, Chromenen und Naphthopyranen
und
a gleich 3 und b gleich 0 sind.

4. Material nach Anspruch 3, enthaltend mindestens ein Silan der Formel (7) mit einer organisch polymerisierbaren Gruppe R' und mindestens ein Silan der Formel (7) mit mindestens einer Gruppe R', die nicht organisch polymerisierbar ist, sowie ggf. zusätzlich mindestens ein Silan der Formel SiX₄, worin X die in Anspruch 1 angegebene Bedeutung besitzt.

5. Material nach einem der voranstehenden Ansprüche mit
(a) 1 bis 99 Gew.-% Silan der Formel (1), bezogen auf die Summe der hydrolytisch kondensierbaren, organisch polymerisierbaren und polymeren Bestandteile des Materials,
und
(b) 1 bis 99, vorzugsweise 50 bis 95 Gew.-% Silan der Formel (7), bezogen auf die Summe der hydrolytisch kondensierbaren, organisch polymerisierbaren und polymeren Bestandteile des Materials.

6. Material nach Anspruch 5, worin das Silan der Formel (7) in einer Menge von 50 bis 95 Gew.-%, bezogen auf die Summe der hydrolytisch kondensierbaren, organisch polymerisierbaren und polymeren Bestandteile des Material, vorhanden ist.

7. Material nach einem der voranstehenden Ansprüche, weiterhin enthaltend
(c) einen nichtsilylierten, photochromen Farbstoff.

8. Material nach einem der voranstehenden Ansprüche, weiterhin enthaltend
(d) 1 bis 30 Gew.-%, bezogen auf die Summe der hydrolytisch kondensierbaren, organisch polymerisierbaren und polymeren Bestandteile des Materials, einer Metallverbindung mit der Formel
MX_{c} (8)
oder deren Hydrolysat und/oder Cokondensat mit dem/den Silan(en) gemäß Anspruch 1, worin X wie voranstehend definiert und ggf. durch ein Komplexierungsmittel ersetzt bzw. verdrängt ist, M ein Metall, ausgewählt unter Aluminium, Zirkon oder Titan ist und c im Falle von Aluminium 3 und ansonsten 4 bedeutet, wobei die Verbindung mit der Formel (8) vorzugsweise in einem Alkohol gelöst zugesetzt wurde.

9. Material nach Anspruch 8, enthaltend bis zu 15 Gew.-% der Metallverbindung mit der Formel (8).

10. Material nach einem der voranstehenden Ansprüche, weiterhin enthaltend
(e) 1 bis 40 Gew.-%, bezogen auf die Summe der hydrolytisch kondensierbaren, organisch polymerisierbaren und polymeren Bestandteile des Materials, eines organisch vernetzbaren Monomeren oder Prepolymeren, dessen vernetzbare Gruppen mit vernetzbaren Gruppen des Restes R' der entsprechenden Silane (7) und ggf. (1) reagieren können.

11. Material nach Anspruch 10, worin das organisch vemetzbare Monomer oder Prepolymer ausgewählt ist unter organischen Anhydriden, organischen Epoxid-Prepolymerisaten (Harzen) und organisch polymerisierbaren Silanen, die eine Anhydrid- oder eine Aminogruppe tragen.

12. Material nach einem der voranstehenden Ansprüche, weiterhin enthaltend
(f) 1 bis 50 Gew.-%, bezogen auf die Summe der hydrolytisch kondensierbaren, organisch polymerisierbaren und polymeren Bestandteile des Materials, mindestens eines Metalloxids mit einer Teilchengröße im Bereich von 1-200 nm

13. Material nach Anspruch 12, worin die Komponente (f) oberflächenmodifiziert ist.

14. Material nach einem der voranstehenden Ansprüche, weiterhin umfassend
(g) mindestens einen UV-Absorber und/oder Radikalfänger und/oder Excited State Quencher.

15. Mit einer hybridpolymeren, photochromen Beschichtung versehener Gegenstand, umfassend ein Substrat, auf dem sich eine Beschichtung aus einem Material wie in einem der voranstehenden Ansprüche definiert befindet, das nach Auftragen thermisch oder durch Bestrahlen ausgehärtet wurde.

16. Mit einer hybridpolymeren photochromen Beschichtung versehener Gegenstand nach Anspruch 15, **dadurch gekennzeichnet, daß** der Gegenstand mindestens eine zweite Beschichtung aufweist.

17. Mit einer hybridpolymeren photochromen Beschichtung versehener Gegenstand nach Anspruch 16, **dadurch gekennzeichnet, daß** die zweite Beschichtung die Beschichtung wie in Anspruch 15 definiert überdeckt und eine Schicht mit besonderer Kratzfestigkeit ist, die ggf. ebenfalls wie in einem der Ansprüche 1 bis 14 zusammengesetzt sein kann.

18. Mit einer hybridpolymeren photochromen Beschichtung versehener Gegenstand nach Anspruch 16, **dadurch gekennzeichnet, daß** die zweite Beschichtung zwischen dem Substrat und der wie in Anspruch 15 definierten Beschichtung angeordnet ist und einen oder mehrere photochrome Farbstoffe enthält, ausgewählt unter silylierten photochromen Farbstoffen, nicht-silylierten organischen photochromen Farbstoffen und Kombinationen silylierter und nichtsilylierter solcher Farbstoffe.

19. Mit einer hybridpolymeren photochromen Beschichtung versehener Gegenstand nach Anspruch 16, **dadurch gekennzeichnet, daß** die zweite Beschichtung eine über der Beschichtung mit dem Material nach einem der Ansprüche 1 bis 14 aufgebrachte, im sichtbaren Spektralbereich und/oder im IR antireflektierende Schicht ist.

20. Mit einer hybridpolymeren photochromen Beschichtung versehener Gegenstand nach einem der Ansprüche 15 bis 18 **dadurch gekennzeichnet, daß** das Substrat eine ophthalmische Linse, ein augenoptisches Material für Sonnenbrillen, Skibrillen oder Visiere, ein Bau- oder Autoglas ist.

21. Mit einer photochromen Beschichtung versehener Gegenstand nach einem der Ansprüche 15 bis 18, **dadurch gekennzeichnet, daß** das Substrat eine Verglasung für den Gebäude- oder Automobilbereich ist.

22. Mit einer photochromen Beschichtung versehener Gegenstand nach Anspruch 21, **dadurch gekennzeichnet, daß** mindestens eine Seite des Substrates mit der Beschichtung versehen ist und mindestens auf dieser Seite ein weiteres Substrat auflaminiert ist.

23. Mit einer photochromen Beschichtung versehener Gegenstand nach Anspruch 22, **dadurch gekennzeichnet, daß** mindestens eine oder die Beschichtung auf der dem Substrat abgewandten Seite mit einer Folie als Zwischenschicht laminiert ist, die den Durchtritt von Sauerstoff hemmt.

24. Mit einer photochromen Beschichtung vorgesehener Gegenstand nach Anspruch 22 oder 23, **dadurch gekennzeichnet, daß** das weitere Substrat ebenfalls eine photochrome Beschichtung aufweist, und mit der photochromen Beschichtung als Innenseite auflaminiert ist.

25. Mit einer photochromen Beschichtung versehener Gegenstand nach einem der Ansprüche 15 bis 24, **dadurch gekennzeichnet, daß** eine oder die photochrome Beschichtung mit einer antireflektierenden Beschichtung in Richtung eines möglichen Sauerstoffzutritts überschichtet ist.

26. Verfahren zur Herstellung eines Gegenstandes nach Anspruch 21, **dadurch gekennzeichnet, daß** eine erste Beschichtung in Form eines Lackes aufgebracht und thermisch oder photochemisch gehärtet wird, worauf die zweite und ggf. jede weitere Beschichtung in Form eines Lacks aufgebracht und thermisch oder photochemisch gehärtet wird.

## Claims

1. Material for hybrid-polymer, photochromic coatings having:
(a) 1 to 100 wt.%, based on the sum of the hydrolytically condensable, organically polymerisable and polymeric constituents of the material, of silane of formula (1):
XₐSi(R')_{b}(A-Y-P)_{4-a-b} (1)
which can be obtained by the reaction of silanes of the formula (2)
XₐSi(R')_{b}(A-Y')_{4-a-b} (2)
with photochromic dyestuffs of the formula (3)
Q-P (3),
and
(b) 0 to 99 wt.%, based on the sum of hydrolytically condensable, organically polymerisable and polymeric constituents of the material, of silane of formula (7):
XₐSi(R')₄₋ₐ (7)
wherein in the above formulae
X is the same or different and represents a hydrolysable group,
R' is the same or different and is a non-hydrolysable, optionally organically polymerisable group bound to the silicon via carbon,
A may be present or not and represents a spacer,
Y' represents a group which is reactive with the group Q,
Q represents a group which is reactive with the group Y',
Y is a group which can be obtained by reaction of the groups Y' and Q,
P is a radical carrying a photochromic group,
a denotes a whole number from 1 to 3,
b denotes a whole number from 0 to 2 and
a+b is 2 or 3,
wherein the silanes (1) and (7) may be present in monomeric form or partly or completely hydrolytically condensed and/or organically prepolymerised,
with the proviso that the silane of formula (1) may only have a proportion of 100 wt.% if b does not equal 0 in formula (1) and R' is an organically polymerisable group, and that the silanes (1) and (7) are selected so that exclusively cyclic or linear polycondensates cannot be produced.

2. Material according to claim 1, wherein the silanes of formulae (1) and (7) are present in co-condensed form, and can be obtained by producing a solution of the silane of formula (1) in a suitable solvent, optionally dissolving or suspending the silane of formula (7) in a suitable solvent, mixing the solution of the silane of formula (1) with the silane of formula (7) and adding water and optionally a catalyst.

3. Material according to claim 1 or 2, wherein
X is hydrogen, halogen, hydroxy or optionally substituted alkoxy having 1 to 4 carbon atoms,
R' represents alkyl or alkenyl having 1 to 12 carbon atoms in the main chain, for example vinyl, wherein these radicals are optionally substituted and/or may be interrupted by O or S atoms or the group NR¹,
A represents a straight-chain alkylene having 2 to 8 carbon atoms and is preferably n-propylene,
Y is ―O- or -NHC(O)O-,
P is selected from spiroindolinonaphthooxazines, spiroisoindolinonaphthooxazines, chromenes and naphthopyrans and
a is equal to 3 and b is equal to 0.

4. Material according to claim 3, containing at least one silane of formula (7) having an organically polymerisable group R' and at least one silane of the formula (7) having at least one group R' which cannot be organically polymerised, and optionally additionally at least one silane of the formula SiX₄, wherein X has the meaning indicated in claim 1.

5. Material according to one of the preceding claims having
(a) 1 to 99 wt.% of silane of formula (1), based on the sum of the hydrolytically condensable, organically polymerisable and polymeric constituents of the material,
and
(b) 1 to 99, preferably 50 to 95, wt.% of silane of formula (7), based on the sum of hydrolytically condensable, organically polymerisable and polymeric constituents of the material.

6. Material according to claim 5, wherein the silane of formula (7) is present in a quantity of 50 to 95 wt.%, based on the sum of hydrolytically condensable, organically polymerisable and polymeric constituents of the material.

7. Material according to one of the preceding claims, also containing
(c) a non-silylated, photochromic dyestuff.

8. Material according to one of the preceding claims, also containing
(d) 1 to 30 wt.%, based on the sum of hydrolytically condensable, organically polymerisable and polymeric constituents of the material, of a metal compound having the formula
MX_{c} (8)
or the hydrolysate thereof and/or co-condensate with the silane(s) according to claim 1, wherein X is as defined above and is replaced or displaced optionally by a complexing agent, M is a metal, selected from aluminium, zirconium or titanium and c denotes 3 in the case of aluminium and 4 otherwise, wherein the compound having the formula (8) was added preferably dissolved in an alcohol.

9. Material according to claim 8, containing up to 15 wt.% of the metal compound having the formula (8).

10. Material according to one of the preceding claims, also containing
(e) 1 to 40 wt.%, based on the sum of hydrolytically condensable, organically polymerisable and polymeric constituents of the material, of an organically crosslinkable monomer or prepolymer, the crosslinkable groups of which may react with crosslinkable groups of the radical R' of the corresponding silanes (7) and optionally (1).

11. Material according to claim 10, wherein the organically crosslinkable monomer or prepolymer is selected from organic anhydrides, organic epoxide-prepolymers (resins) and organically polymerisable silanes, which carry an anhydride group or an amino group.

12. Material according to one of the preceding claims, also containing
(f) 1 to 50 wt.%, based on the sum of hydrolytically condensable, organically polymerisable and polymeric constituents of the material, of at least one metal oxide having a particle size in the range from 1-200 nm.

13. Material according to claim 12, wherein component (f) is surface-modified.

14. Material according to one of the preceding claims, also comprising
(g) at least one UV absorber and/or radical absorber and/or Excited State Quencher.

15. Object provided with a hybrid-polymer, photochromic coating, comprising a substrate, on which a coating made from a material as defined in one of the preceding claims which, after application, has been cured thermally or by irradiation, is situated.

16. Object provided with a hybrid-polymer, photochromic coating according to claim 15, **characterised in that** the object has at least one second coating.

17. Object provided with a hybrid-polymer, photochromic coating according to claim 16, **characterised in that** the second coating covers the coating as defined in claim 15 and is a layer having particular scratch resistance, which may optionally be composed likewise as in one of claims 1 to 14.

18. Object provided with a hybrid-polymer, photochromic coating according to claim 16, **characterised in that** the second coating is arranged between the substrate and the coating as defined in claim 15 and contains one or more photochromic dyestuffs, selected from silylated photochromic dyestuffs, non-silylated organic photochromic dyestuffs and combinations of silylated and such non-silylated dyestuffs.

19. Object provided with a hybrid-polymer, photochromic coating according to claim 16, **characterised in that** the second coating is a layer which is applied above the coating with the material according to one of claims 1 to 14 and is anti-reflecting in the visible spectral range and/or in the IR.

20. Object provided with a hybrid-polymer, photochromic coating according to one of claims 15 to 18, **characterised in that** the substrate is an ophthalmic lens, an ophthalmologic material for sunglasses, ski goggles or visors, structural glass or car glass.

21. Object provided with a photochromic coating according to one of claims 15 to 18, **characterised in that** the substrate is glazing for the building or automobile sector.

22. Object provided with a photochromic coating according to claim 21, **characterised in that** at least one side of the substrate is provided with the coating and a further substrate is laminated at least on this side.

23. Object provided with a photochromic coating according to claim 22, **characterised in that** at least one or the coating is laminated on the side facing away from the substrate with a film as intermediate layer which inhibits the passage of oxygen.

24. Object provided with a photochromic coating according to claim 22 or 23, **characterised in that** the further substrate likewise has a photochromic coating, and is laminated with the photochromic coating as the inner side.

25. Object provided with a photochromic coating according to one of claims 15 to 24, **characterised in that** one or the photochromic coating is coated with an anti-reflecting coating in the direction of possible admission of oxygen.

26. Process for producing an object according to claim 21, **characterised in that** a first coating is applied in the form of a lacquer and cured thermally or photochemically, whereupon the second and optionally each further coating is applied in the form of a lacquer and cured thermally or photochemically.

## Revendications

1. Matériau pour revêtements polymères hybrides photosensibles, comprenant :
(a) 1 à 100 % en poids, par rapport à la somme des constituants condensables par hydrolyse, polymérisables par voie organique et polymères du matériau,
d'un silane de formule (1) :
XₐSi(R')_{b} (A-Y-P)_{4-a-b} (1)
pouvant être obtenu par réaction de silanes de formule (2)
XₐSi(P,')_{b} (A-Y')_{4-a-b} (2)
avec des colorants photosensibles de formule (3)
Q-P (3),
et
(b) 0 à 99 % en poids, par rapport à la somme des constituants condensables par hydrolyse, polymérisables par voie organique et polymères du matériau, d'un silane de formule (7) :
XₐSi(R')₄₋ₐ (7)
formules dans lesquelles
X a la même valeur ou des valeurs différentes et représente un groupe hydrolysable,
R' a la même valeur ou des valeurs différentes et représente un groupe non hydrolysable, lié au silicium par l'intermédiaire de carbone, éventuellement polymérisable par voie organique,
A peut être présent ou non et représente un espaceur,
Y' représente un groupe réactif avec le groupe Q,
Q représente un groupe réactif avec le groupe Y',
Y est un groupe qui peut être obtenu par réaction des groupes Y' et Q,
P est un reste portant un groupe photosensible,
a est un nombre entier ayant une valeur de 1 à 3,
b est un nombre entier ayant une valeur de 0 à 2, et
la somme a+b est égale à 2 ou 3,
les silanes (1) et (7) pouvant être présents sous forme monomère ou sous une forme partiellement ou totalement condensée par hydrolyse et/ou prépolymérisée par voie organique,
sous réserve que le silane de formule (1) ne puisse être présent en proportion de 100 % en poids que lorsque, dans la formule (1), b est différent de 0 et R' est un groupe polymérisable par voie organique, et que les silanes (1) et (7) sont choisis de manière qu'ils ne puissent pas se former de polycondensats exclusivement cycliques ou linéaires.

2. Matériau suivant la revendication 1, dans lequel les silanes de formules (1) et (7) se présentent sous une forme co-condensée, pouvant être obtenue par préparation d'une solution du silane de formule (1) dans un solvant convenable, éventuellement dissolution ou mise en suspension du silane de formule (7) dans un solvant convenable, mélange de la solution du silane de formule (1) avec le silane de formule (7) et addition d'eau et, éventuellement, d'un catalyseur.

3. Matériau suivant la revendication 1 ou 2, dans lequel
X représente l'hydrogène, un halogène, un groupe hydroxy ou un reste alkoxy, éventuellement substitué, ayant 1 à 4 atomes de carbone,
R' est un reste alkyle ou alcényle ayant 1 à 12 atomes de carbone dans la chaîne principale, par exemple un reste vinyle, ces restes étant éventuellement substitués et/ou pouvant être interrompus par des atomes de O ou S ou par le groupe NR¹,
A est un reste alkylène linéaire ayant 2 à 8 atomes de carbone et est avantageusement le reste n-propylène,
Y représente -O- ou NHC(O)O-,
P est choisi parmi des spiro-indolinonaphto-oxazines,
des spiro-isoindolinonaphto-oxazines, des chromènes et des naphtopyrannes
et
a est égal à 3 et b est égal à 0.

4. Matériau suivant la revendication 3, contenant au moins un silane de formule (7) portant un groupe R' polymérisable par voie organique et au moins un silane de formule (7) portant au moins un groupe R' qui n'est pas polymérisable par voie organique, ainsi que, le cas échéant, en supplément, au moins un silane de formule SiX₄ dans laquelle X a la définition indiquée dans la revendication 1.

5. Matériau suivant l'une des revendications précédentes, comprenant :
(a) 1 à 99 % en poids de silane de formule (1), par rapport à la somme des constituants condensables par hydrolyse, polymérisables par voie organique et polymères du matériau, et
(b) 1 à 99 % en poids, avantageusement 50 à 95 % en poids du silane de formule (7) par rapport à la somme des constituants condensables par hydrolyse, polymérisables par voie organique et polymères du matériau.

6. Matériau suivant la revendication 5, dans lequel le silane de formule (7) est présent en une quantité de 50 à 95 % en poids par rapport à la somme des constituants condensables par hydrolyse, polymérisables par voie organique et polymères du matériau.

7. Matériau suivant l'une des revendications précédentes, contenant en outre
(c) un colorant photosensible non silylé.

8. Matériau suivant l'une des revendications précédentes, contenant en outre
(d) 1 à 30 % en poids, par rapport à la somme des constituants condensables par hydrolyse, polymérisables par voie organique et polymères du matériau, d'un composé métallique de formule
MX_{c} (8)
ou de son hydrolysat et/ou de son co-condensat avec le ou les silanes suivant la revendication 1, formule dans laquelle X est tel que défini ci-dessus et est éventuellement remplacé ou déplacé par un agent de complexation, M est un métal, choisi entre l'aluminium, le zirconium et le titane, et c est égal à 3 dans le cas de l'aluminium, sinon égal à 4, le composé de formule (8) ayant avantageusement été ajouté sous forme de solution dans un alcool.

9. Matériau suivant la revendication 8, contenant jusqu'à 15 % en poids du composé métallique de formule (8).

10. Matériau suivant l'une des revendications précédentes, contenant en outre
(e) 1 à 40 % en poids, par rapport à la somme des constituants condensables par hydrolyse, polymérisables par voie organique et polymères du matériau, d'un monomère ou prépolymère réticulable par voie organique, dont les groupes réticulables peuvent réagir avec des groupes réticulables du reste R' des silanes (7) et, le cas échéant, (1) correspondants.

11. Matériau suivant la revendication 10, dans lequel le monomère ou prépolymère réticulable par voie organique est choisi parmi des anhydrides organiques, des prépolymérisats organiques d'époxydes (résines) et des silanes polymérisables par voie organique, qui portent un groupe anhydride ou un groupe amino.

12. Matériau suivant l'une des revendications précédentes, contenant en outre
(f) 1 à 50 % en poids, par rapport à la somme des constituants condensables par hydrolyse, polymérisables par voie organique et polymères du matériau, d'au moins un oxyde métallique en particules de taille comprise dans la plage de 1 à 200 nm.

13. Matériau suivant la revendication 12, dans lequel le composant (f) est modifié à sa surface.

14. Matériau suivant l'une des revendications précédentes, comprenant en outre
(g) au moins un absorbeur de rayons ultraviolets et/ou un capteur de radicaux et/ou un Excited State Quencher.

15. Objet pourvu d'un revêtement polymère-hybride photosensible, comprenant un substrat sur lequel se trouve un revêtement en un matériau tel que défini dans l'une quelconque des revendications précédentes, qui a été durci thermiquement ou par irradiation après son application.

16. Objet pourvu d'un revêtement polymère hybride photosensible suivant la revendication 15, **caractérisé en ce qu'**il présente au moins un second revêtement.

17. Objet pourvu d'un revêtement polymère hybride photosensible suivant la revendication 16, **caractérisé en ce que** le second revêtement recouvre le revêtement tel que défini dans la revendication 15 et est une couche douée d'une résistance particulière à la rayure, qui peut éventuellement être également de composition telle que définie dans les revendications 1 à 14.

18. Objet pourvu d'un revêtement polymère hybride photosensible suivant la revendication 16, **caractérisé en ce que** le second revêtement est disposé entre le substrat et le revêtement tel que défini dans la revendication 15 et contient un ou plusieurs colorants photosensibles, choisis entres des colorants photosensibles silylés, des colorants photosensibles non silylés et des combinaisons de tels colorants silylés et non silylés.

19. Objet pourvu d'un revêtement polymère hybride photosensible suivant la revendication 16, **caractérisé en ce que** le second revêtement est une couche appliquée par-dessus le revêtement comprenant le matériau suivant l'une des revendications 1 à 14, anti-réfléchissante dans le domaine spectral visible et/ou dans l'infrarouge.

20. Objet pourvu d'un revêtement polymère hybride photosensible suivant l'une des revendications 15 à 18, **caractérisé en ce que** le substrat est une lentille ophtalmique, un matériau optique oculaire pour lunettes de soleil, lunettes de ski ou visières, un verre à vitres ou un verre pour véhicules automobiles.

21. Objet pourvu d'un revêtement polymère hybride photosensible suivant l'une des revendications 15 à 18, **caractérisé en ce que** le substrat est un vitrage pour le bâtiment ou l'industrie automobile.

22. Objet pourvu d'un revêtement polymère hybride photosensible suivant la revendication 21, **caractérisé en ce qu'**au moins un côté du substrat est pourvu du revêtement et un autre substrat est appliqué par stratification au moins sur ce côté.

23. Objet pourvu d'un revêtement polymère hybride photosensible suivant la revendication 22, **caractérisé en ce qu'**au moins un revêtement ou le revêtement du côté tourné vers le substrat est stratifié comme couche intermédiaire avec une feuille qui s'oppose au passage d'oxygène.

24. Objet pourvu d'un revêtement polymère hybride photosensible suivant la revendication 22 ou 23, **caractérisé en ce que** l'autre substrat présente également un revêtement photosensible et est stratifié avec le revêtement photosensible en formant le côté intérieur.

25. Objet pourvu d'un revêtement polymère hybride photosensible suivant l'une des revendications 15 à 24, **caractérisé en ce qu'**un ou le revêtement photosensible est recouvert d'un revêtement anti-réfléchissant tenant compte d'une entrée possible d'oxygène.

26. Procédé de fabrication d'un objet suivant la revendication 21, **caractérisé en ce qu'**un premier revêtement sous forme d'une laque est appliqué et est durci thermiquement ou par voie photochimique, par-dessus lequel le second revêtement et, le cas échéant, tout autre revêtement, sont appliqués sous forme d'une laque et sont durcis thermiquement ou par voie photochimique.
